# EUROPEAN PATENT APPLICATION

(11) **EP 4 435 764 A1**
(43) Date of publication of application: **25.09.2024**
(21) Application number: 22914173.4
(22) Date of filing: 09.12.2022
(51) Int. Cl.: G09F 9/30, G09F 9/33, G02F 1/1333

(54) **DISPLAY MODULE AND ELECTRONIC DEVICE**

(30) Priority: 31.12.2021 CN 202111676037
(71) Applicant: Huawei Technologies Co., Ltd., Shenzhen, Guangdong 518129 (CN)
(72) Inventor: YOU, Yulin, Shenzhen, Guangdong 518129 (CN); NIU, Pengcheng, Shenzhen, Guangdong 518129 (CN); WANG, Haiyang, Shenzhen, Guangdong 518129 (CN); LUO, Yufeng, Shenzhen, Guangdong 518129 (CN); CHEN, Nannan, Shenzhen, Guangdong 518129 (CN); LI, Min, Shenzhen, Guangdong 518129 (CN); HUANG, Lihua, Shenzhen, Guangdong 518129 (CN)
(74) Representative: Gill Jennings & Every LLP
(86) International application number: PCT/CN2022/138114
(87) International publication number: WO 2023/124918

(57) **Abstract**

A display module (100) and an electronic device are provided. The display module (100) includes a display panel (11) and a flat cable circuit board (13). The display panel (11) includes a display part (111), a bending part (112), and a packaging part (113). The packaging part (113) is bent to a back side of a light-emitting surface of the display part (111) by using the bending part (112), the packaging part (113) includes a first end and a second end, the first end is an end that is of the packaging part (113) and that is away from the bending part (112), and the second end is an end that is of the packaging part (113) and that is connected to the bending part (112). The flat cable circuit board (13) is a multilayer printed circuit board or a multilayer flexible printed circuit, the flat cable circuit board (13) is disposed on a surface that is of the packaging part (113) and that faces away from the display part (111), and the flat cable circuit board (13) is located between the first end and the second end. A first bonding area (1131) is disposed on the packaging part (113), the first bonding area (1131) is located at the first end, and a partial area of the flat cable circuit board (13) is bonded to the first bonding area (1131), so that space occupied by the flat cable circuit board (13) is reduced, thereby providing more space for a battery (400).

## Description

This application claims priority to Chinese Patent Application No. 202111676037.2, filed with the China National Intellectual Property Administration on December 31, 2021 and entitled "DISPLAY MODULE AND ELECTRONIC DEVICE", which is incorporated herein by reference in its entirety.

### TECHNICAL FIELD

This application relates to the field of display technologies, and in particular, to a display module and an electronic device.

### BACKGROUND

With continuous popularization of electronic devices, an electronic device gradually tends to be extremely thin and light, and a user continuously raises a higher requirement for a battery capacity of the electronic device. Lightening and thinning of the electronic device cause limited internal space of the entire device, and inevitably compress space of a battery. This requires components such as a display module of the electronic device to be more compact, to reserve plenty of space for the battery.

In a related technology, the display module may use a flexible display. In a packaging manner of the flexible display, in a COP (Chip On Pi, where a chip is bonded to a polyimide film of a display panel) packaging process, a packaging part is bent to a back side of a display part, so that frame space that is of the electronic device and that is occupied by the packaging part may be reduced.

However, in the related technology, a flat cable circuit board bonded to the packaging part has a relatively large size, and occupies space of a length size and a width size of the electronic device to a large extent, thereby affecting battery layout space and causing a battery capacity loss.

### SUMMARY

Embodiments of this application provide a display module and an electronic device, to increase a battery capacity.

An aspect of the embodiments of this application provides a display module, including: A display panel includes a display part, a bending part, and a packaging part. The packaging part is bent to a back side of a light-emitting surface of the display part by using the bending part, the packaging part includes a first end and a second end, the first end is an end that is of the packaging part and that is away from the bending part, and the second end is an end that is of the packaging part and that is connected to the bending part. A flat cable circuit board is a multilayer printed circuit board or a multilayer flexible printed circuit, a quantity of wiring layers of the flat cable circuit board is greater than or equal to layers, the flat cable circuit board is disposed on a surface that is of the packaging part and that faces away from the display part, and the flat cable circuit board is located between the first end and the second end. A first bonding area is disposed on the packaging part, the first bonding area is located at the first end, and a partial area of the flat cable circuit board is bonded to the first bonding area.

An embodiment of this application provides a display module. A flat cable circuit board is bonded to a packaging part that is of a display panel and that is bent to a back side of a light-emitting surface, and the flat cable circuit board is located between two ends of the packaging part. Compared with a solution in which the flat cable circuit board extends out of a first end of the packaging part in a related technology, this may reduce a size occupied by the flat cable circuit board, thereby providing more space for a battery and increasing a battery capacity of an electronic device. A partial area of the flat cable circuit board is used for bonding, so that space on the packaging part may be used to a maximum extent, a cable layout area of the flat cable circuit board may be increased, and space utilization may be improved.

The flat cable circuit board is disposed as a multilayer circuit board, so that the space on the packaging part may be used, that is, space in a thickness direction of the electronic device may be fully used. In addition, when an area of the packaging part is relatively small, an advantage of space utilization of the flat cable circuit board may be fully used by increasing a quantity of wiring layers of the flat cable circuit board.

In a possible implementation, the flat cable circuit board includes a first zone and a second zone, a bonding pin is disposed in the first zone, the bonding pin is bonded to the first bonding area, and an adhesive is disposed between the second zone and the packaging part.

An area that corresponds to the first bonding area and that is on the flat cable circuit board is used to dispose the bonding pin, and another area is used to be attached to the packaging part by using an adhesive, to ensure reliability of bonding and pasting between the flat cable circuit board and the packaging part.

In a possible implementation, the display module further includes a driver chip, the driver chip is disposed on the surface that is of the packaging part and that faces away from the display part, a second bonding area is disposed on the packaging part, the second bonding area is located between the bending part and the first bonding area, and the driver chip is bonded to the second bonding area.

In a possible implementation, a through hole is disposed on the flat cable circuit board, the driver chip is disposed in the through hole, and there is a spacing between the driver chip and a side wall of the through hole.

The through hole is disposed on the flat cable circuit board to arrange the driver chip, so that a layout is more compact, compared with a layout manner such as a manner in which the flat cable circuit board and the driver chip are disposed side by side. This helps reduce the area of the packaging part. In addition, there is no limitation on a height relationship between the driver chip and the flat cable circuit board, and an application scope is wider. In a possible implementation, a blind hole is disposed on the flat cable circuit board, the driver chip is disposed in the blind hole, and a sum of a depth of the blind hole and a thickness of the adhesive is greater than or equal to a height that is of the driver chip and that is relative to the packaging part.

The blind hole is disposed to accommodate the driver chip, and is more applicable to a solution in which a thickness of the driver chip is less than a thickness of the flat cable circuit board. In addition, a wiring layer can still be arranged in an area above the blind hole on the flat cable circuit board, thereby increasing a wiring area. In addition, a proper height setting can avoid interference between the driver chip and a bottom wall of the blind hole.

In a possible implementation, the display module further includes a flexible cabling circuit board, the flexible cabling circuit board is connected to a wide edge of the flat cable circuit board, and the flexible cabling circuit board is configured to connect to a main board. An extension direction of the wide edge of the flat cable circuit board is the same as a direction from the first end to the second end.

The flexible cabling circuit board is disposed to implement cabling from the wide edge of the flat cable circuit board. Compared with a solution in which cabling from the middle of the flat cable circuit board is implemented in a related technology, this avoids damaging the flat cable circuit board to dispose a relief, so that component layout space and cable layout space of the electronic device are not wasted, thereby helping increase the battery capacity. In addition, wide-edge cabling does not cause a hole design of a middle frame, and therefore does not affect strength of the entire device. Therefore, reliability of the electronic device may be improved.

In a possible implementation, the display module further includes a waterproof dispensed glue, and the waterproof dispensed glue extends along an edge of the flat cable circuit board to fill a gap between the flat cable circuit board and the packaging part. Three sides of the flat cable circuit board other than a side facing the bending part are all covered with the waterproof dispensed glue.

The waterproof dispensed glue may fill a gap (Z-direction space) between the flat cable circuit board and the packaging part, to prevent liquid from entering below the flat cable circuit board, and prevent the liquid from damaging the first bonding area and the driver chip.

In a possible implementation, the display module further includes a waterproof back adhesive, the waterproof back adhesive is attached to a surface that is of the flat cable circuit board and that faces away from the packaging part, and the waterproof back adhesive is located at an end that is of the flat cable circuit board and that is close to the bending part, and extends along a length direction of the flat cable circuit board. The waterproof back adhesive covers a full length of the flat cable circuit board. Projections that are of the waterproof back adhesive and the waterproof dispensed glue and that are on the packaging part form a closed pattern.

The waterproof back adhesive may fill Z-direction space between the packaging part and the middle frame, to prevent external liquid from entering the packaging part, and prevent the liquid from damaging the flat cable circuit board.

In a possible implementation, the bonding pin is disposed on a bottom wiring layer in the first zone, and the bottom wiring layer is a layer that is in the plurality of wiring layers and that is closest to the packaging part. The bonding pin is connected to wiring on a bottom wiring layer in the second zone, or the bonding pin is connected to wiring on a non-bottom wiring layer in the first zone.

Wiring or no wiring may be disposed in the area that corresponds to the first bonding area and that is on the flat cable circuit board, to flexibly use a wiring area of the flat cable circuit board.

In a possible implementation, the display module further includes a metal plate, and the metal plate is attached to the back side of the light-emitting surface of the display part.

The metal plate may be attached to the back side of the light-emitting surface of the display part, to support the display module and increase structural strength of the display module, and may be used as a ground terminal of the display module.

In a possible implementation, the flat cable circuit board includes an extension area extending out of a wide edge of the packaging part, a ground point is disposed in the extension area, the ground point is disposed on a surface that is of the flat cable circuit board and that faces the packaging part, and the ground point is in contact with the metal plate for conduction.

The area that is of the flat cable circuit board and that extends out of the wide edge of the packaging part is used, so that the ground point of the flat cable circuit board directly comes into contact with the metal plate to implement grounding. A structure is simple, and easy to implement.

In a possible implementation, the display module further includes a conductive wire, a ground point is disposed on the surface that is of the flat cable circuit board and that faces away from the packaging part, one end of the conductive wire is connected to the ground point, the other end of the conductive wire is connected to the metal plate, and an extension direction of the conductive wire is the same as a width direction of the packaging part.

The flat cable circuit board is connected to the metal plate by using the stretched conductive wire, to implement grounding. A structure is simple, and easy to implement.

In a possible implementation, the display module further includes a conductive connector, a ground point is disposed on the surface that is of the flat cable circuit board and that faces away from the packaging part, the conductive connector is connected to the ground point, and the conductive connector is configured to connect to a middle frame.

The flat cable circuit board is connected to the middle frame by using the conductive connector, to implement grounding. A structure is simple, and easy to implement.

Another aspect of the embodiments of this application provides an electronic device, including a middle frame, a rear cover, and the foregoing display module. The display module and the rear cover are respectively connected to two sides of the middle frame, accommodating space is enclosed by the display module, the rear cover, and the middle frame, a main board and a battery are disposed in the accommodating space, and the flat cable circuit board is connected to the main board by using the flexible cabling circuit board.

Embodiments of this application provide a display module and an electronic device. A flat cable circuit board is bonded to a packaging part that is of a display panel and that is bent to a back side of a light-emitting surface, and the flat cable circuit board is located between two ends of the packaging part. Compared with a solution in which the flat cable circuit board extends out of a first end of the packaging part in a related technology, this may reduce a size occupied by the flat cable circuit board, thereby providing more space for a battery and increasing a battery capacity of the electronic device. A partial area of the flat cable circuit board is used for bonding, so that space on the packaging part may be used to a maximum extent, a cable layout area of the flat cable circuit board may be increased, and space utilization may be improved. The battery capacity may be effectively increased, a plurality of arrangement manners and bonding structures of the flat cable circuit board and a driver chip are further provided, and a waterproofing solution and a grounding solution are adaptively provided, so that the display module is more flexible in an overall space design.

### BRIEF DESCRIPTION OF DRAWINGS

FIG. 1 is a diagram of a structure of an electronic device according to an embodiment of this application;
FIG. 2 is a diagram of a structure obtained by assembling a display module, a middle frame, a main board, and a battery according to an embodiment of this application;
FIG. 3 is a diagram of a structure obtained by disassembling a display module, a middle frame, a main board, and a battery according to an embodiment of this application;
FIG. 4 is a diagram of a partial cross section of a display module according to an embodiment of this application;
FIG. 5 is a simplified diagram of a structure of a display module according to a related technology;
FIG. 6 is a simplified diagram of a structure of a display module according to an embodiment of this application;
FIG. 7 is a diagram of a bonding and cabling structure of a flat cable circuit board according to an embodiment of this application;
FIG. 8 is a top view of a packaging part according to an embodiment of this application;
FIG. 9 is a diagram of wiring on a flexible bonding circuit board and a flat cable circuit board according to an embodiment of this application;
FIG. 10 is a schematic top view of a waterproof structure of a display module according to a related technology;
FIG. 11 is a schematic side view of a waterproof structure of a display module according to a related technology;
FIG. 12 is a diagram of a waterproof structure of a display module according to an embodiment of this application;
FIG. 13 is a diagram of a position of a flexible cabling circuit board according to a related technology;
FIG. 14 is a diagram of a position of a flexible cabling circuit board according to an embodiment of this application;
FIG. 15 is an enlarged view of a structure in a dashed-line box in FIG. 3;
FIG. 16 is an enlarged view of a structure in a dashed-line box in FIG. 2;
FIG. 17 is a diagram of a waterproofing solution corresponding to a flexible cabling circuit board according to a related technology;
FIG. 18 is a diagram of a waterproofing solution corresponding to a flexible cabling circuit board according to an embodiment of this application;
FIG. 19 is a diagram of an unfolded structure of a packaging part according to a related technology;
FIG. 20 is a diagram of an unfolded structure of a packaging part according to an embodiment of this application;
FIG. 21a is a diagram of a structure of a display module according to an embodiment of this application;
FIG. 21b is a diagram of a partial cross section of a display module according to an embodiment of this application;
FIG. 21c is a simplified diagram of a structure of a display module according to an embodiment of this application;
FIG. 22a is a diagram of a structure of a display module according to an embodiment of this application;
FIG. 22b is a diagram of a partial cross section of a display module according to an embodiment of this application;
FIG. 23 is a simplified diagram of a structure of a display module according to an embodiment of this application;
FIG. 24 is a diagram of a bonding and cabling structure of a flat cable circuit board according to an embodiment of this application;
FIG. 25 is a top view of a packaging part according to an embodiment of this application;
FIG. 26 is a diagram of wiring on a flexible bonding circuit board and a flat cable circuit board according to an embodiment of this application;
FIG. 27 is a diagram of a waterproof structure of a display module according to an embodiment of this application;
FIG. 28a is a diagram of a structure of a display module according to an embodiment of this application;
FIG. 28b is a diagram of a partial cross section of a display module according to an embodiment of this application;
FIG. 28c is a simplified diagram of a structure of a display module according to an embodiment of this application;
FIG. 29a is a diagram of a structure of a display module according to an embodiment of this application;
FIG. 29b is a diagram of a partial cross section of a display module according to an embodiment of this application;
FIG. 30 is a simplified diagram of a structure of a display module according to an embodiment of this application;
FIG. 31 is a top view of a packaging part according to an embodiment of this application;
FIG. 32a is a diagram of wiring on a flexible bonding circuit board and a flat cable circuit board according to an embodiment of this application;
FIG. 32b is another diagram of wiring on a flat cable circuit board according to an embodiment of this application;
FIG. 33 is a diagram of a waterproof structure of a display module according to an embodiment of this application;
FIG. 34a is a top view of a display module in which a display panel is in an unfolded state according to a related technology;
FIG. 34b is a side sectional view of a display module in which a display panel is in a bent state according to a related technology;
FIG. 35a is a top view of a display module in which a display panel is in an unfolded state according to an embodiment of this application;
FIG. 35b is a side sectional view of a display module in which a display panel is in a bent state according to an embodiment of this application;
FIG. 36a is a top view of a display module in which a display panel is in an unfolded state according to an embodiment of this application;
FIG. 36b is a side sectional view of a display module in which a display panel is in a bent state according to an embodiment of this application;
FIG. 37a is a top view of a display module in which a display panel is in an unfolded state according to an embodiment of this application; and
FIG. 37b is a side sectional view of a display module in which a display panel is in a bent state according to an embodiment of this application.

### Reference numerals:

100: display module; 11: display panel; 111: display part; 112: bending part; 113: packaging part; 1131: first bonding area; 1132: second bonding area;
12: driver chip; 13: flat cable circuit board; 13a: first zone; 13b: second zone; 1301: wiring layer; 1302: insulation layer; 1303: extension area; 131: electronic component; 1321: through hole; 1322: blind hole;
14: flexible bonding circuit board; 140: bonding pin; 141: extension section; 142: transition section; 143: bonding section; 144: supporting component; 15: flexible cabling circuit board; 151: connection section; 152: main section; 16: metal plate; 17: cover plate;
181: waterproof dispensed glue; 182: waterproof back adhesive; 191: ground point; 192: conductive connector; 193: conductive wire; and
200: middle frame; 21: avoidance hole; 300: rear cover; 400: battery; 500: main board; 50: board to board connector; 51: avoidance hole.

### DESCRIPTION OF EMBODIMENTS

"Mobile office" may also be referred to as "3A office" or mobile OA (Office Automation), that is, office personnel can handle any business-related thing (Anything) anytime (Anytime) and anywhere (Anywhere). This new office mode frees the office personnel from time and space constraints. Organization information may be smoothly exchanged anytime and anywhere, making work easier and more efficient, and overall operating more coordinated. In addition, mobile informatization software on an electronic device such as a mobile phone may be used to establish an enterprise software application system that interconnects the mobile phone and a computer, getting rid of time and place limitations, facilitating company management and communication at any time and any place, and promoting growth of government and enterprise benefits.

Regardless of whether the electronic device is a bar-type phone, a flip phone, or a tablet computer, if these electronic devices are to give full play to advantages of mobile office, the electronic devices should be as light and thin as possible. Due to a bottleneck of current battery technologies, a battery life of the entire device becomes a key bottleneck factor for lightening and thinning of the electronic device. Therefore, how to maximize a battery capacity in limited space and bring best experience for mobile office becomes a key factor in competitiveness of the entire electronic device.

In a related technology, a display module of an electronic device usually uses a COP (Chip On Pi, where a chip is bonded to a polyimide film of a display panel) packaging process, and a flexible substrate is used to fold, to a back side of a display part, a packaging part that is on the display panel and that is configured to bond a flat cable and the chip. In the related technology, a flexible printed circuit bonded by using COP has a relatively large area size, and occupies space of a length size and a width size of the electronic device to a large extent, thereby generating a large amount of invalid space for a battery in the electronic device. This becomes a leading factor of a battery capacity loss.

Based on this problem, embodiments of this application provide a display module and an electronic device. Both a flat cable circuit board and a driver chip are bonded to a packaging part that is of a display panel and that is bent to a back side of a light-emitting surface, so that a length size and a width size that are occupied by the flat cable circuit board may be reduced, thereby providing more space for a battery and increasing a battery capacity of the electronic device.

The following embodiments of this application provide an electronic device, including but not limited to an electronic device with a display, such as a mobile phone, a flip phone, a tablet computer, a laptop computer, an ultra-mobile personal computer (ultra-mobile personal computer, UMPC), a handheld computer, a walkie-talkie, a netbook, a POS terminal, a personal digital assistant (personal digital assistant, PDA), a wearable device, a virtual reality device, a wireless USB flash drive, a Bluetooth speaker, a Bluetooth headset, or a vehicle-mounted apparatus.

In embodiments of this application, a mobile phone is used as an example of the foregoing electronic device to specifically describe a structure of the electronic device.

It should be noted that, in accompanying drawings of embodiments of this application, an X-axis may be defined as a length direction of the electronic device, a Y-axis may be defined as a width direction of the electronic device, and a Z-axis may be defined as a thickness direction of the electronic device. More specifically, a light-emitting surface of a display of the electronic device may be defined as a positive direction of the Z-axis.

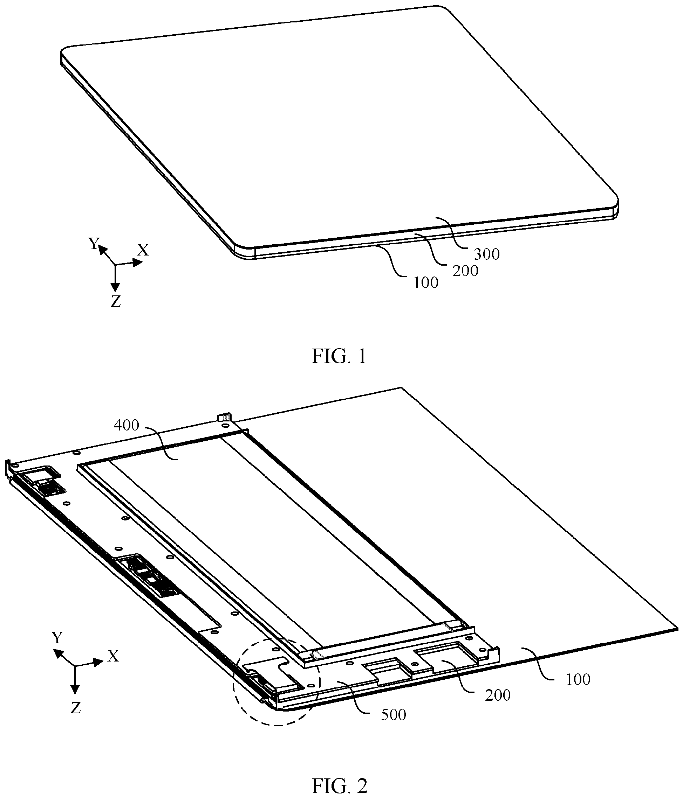

FIG. 1 is a diagram of a structure of an electronic device according to an embodiment of this application. As shown in FIG. 1, the electronic device may include a middle frame 200, and a display module 100 and a rear cover 300 that are respectively connected to two sides of the middle frame 200. Accommodating space is enclosed by the display module 100, the middle frame 200, and the rear cover 300 together. A main board, a battery, a camera module, and another electronic component may be disposed in the accommodating space.

The display module 100 may include a liquid crystal display (Liquid Crystal Display, LCD), an organic light-emitting diode (Organic light emitting diode, OLED) display panel, or another display panel. The middle frame 200 mainly plays a role of supporting the entire device, and may be made of a material such as metal, a ceramic, glass, or plastic. The rear cover 300 may be made of a material such as metal, a ceramic, glass, or plastic. The middle frame 200 and the rear cover 300 may be separately formed, and may be fastened in a manner of soldering, clamping, pasting, or the like.

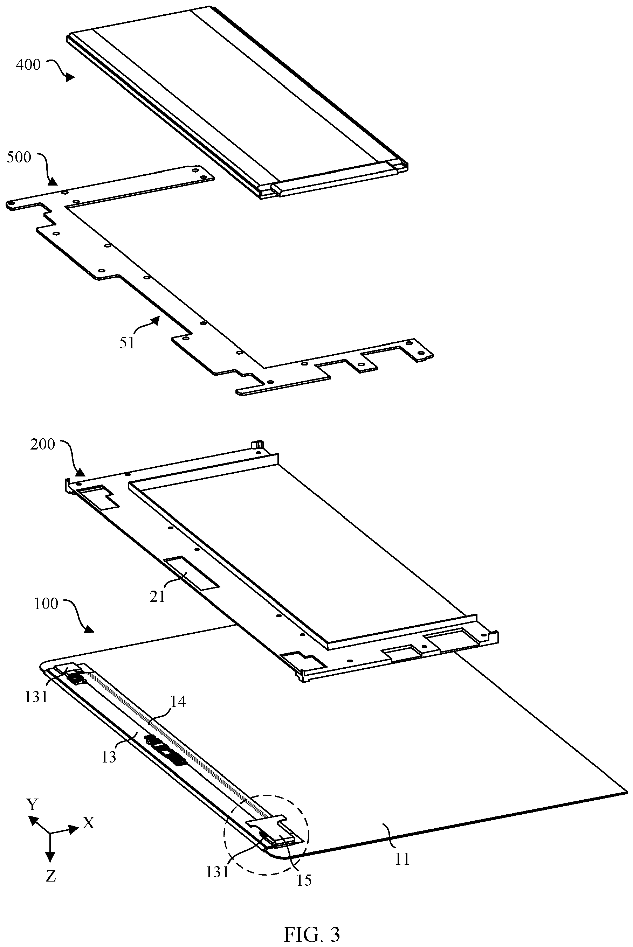

FIG. 2 is a diagram of a structure obtained by assembling a display module, a middle frame, a main board, and a battery according to an embodiment of this application. FIG. 3 is a diagram of a structure obtained by disassembling a display module, a middle frame, a main board, and a battery according to an embodiment of this application. As shown in FIG. 2 and FIG. 3, a display module 100 may be connected to a side of a middle frame 200, for example, a lower side in the figure. The display module 100 may be fastened to the middle frame 200 in a pasting manner. A main board 500 and a battery 400 may be disposed on a side that is of the middle frame 200 and that faces away from the display module 100, that is, disposed between the middle frame 200 and a rear cover 300.

The main board 500 may be fastened and connected to the middle frame 200 in a manner of pasting, screwing, or the like. The battery 400 may be fastened and connected to the middle frame 200 in a manner of pasting or the like. The display module 100 and the battery 400 may be electrically connected to the main board 500 in a manner of a flexible printed circuit, a cable, a conductive component, or the like. In this embodiment of this application, a shape of the main board 500 and a position relationship between the main board 500 and the battery 400 are not specifically limited. For example, the main board 500 may be disposed in a "U" shape, and may be arranged around the battery 400.

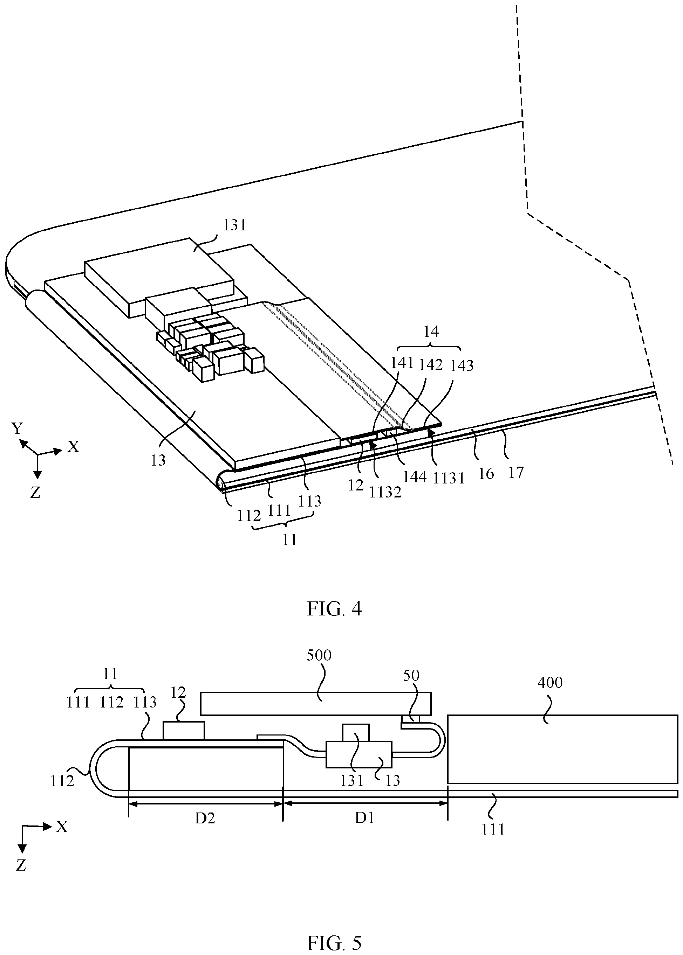

FIG. 4 is a diagram of a partial cross section of a display module according to an embodiment of this application. As shown in FIG. 3 and FIG. 4, the display module 100 may include a display panel (panel) 11, a driver chip (Driver IC) 12, a flat cable circuit board 13, a flexible bonding circuit board 14, and a flexible cabling circuit board 15.

The driver chip 12 may be bonded to the display panel 11, to drive the display panel 11 to implement a display function. The flat cable circuit board 13 may be bonded to the display panel 11 by using the flexible bonding circuit board 14. A plurality of electronic components 131, such as a fingerprint module chip, may be arranged on the flat cable circuit board 13. One end of the flexible cabling circuit board 15 may extend from a side wall of the flat cable circuit board 13, and the other end may be connected to the main board 500, for example, may be fastened to the main board 500 by using a board to board (Board to Board, BTB) connector, so that an electrical connection between the display module 100 and the main board 500 may be implemented. The driver chip 12, the flat cable circuit board 13, the flexible bonding circuit board 14, and the flexible cabling circuit board 15 may all be disposed on a back side of a light-emitting surface of the display panel 11, and the electronic components 131 are located on a side that is of the flat cable circuit board 13 and that faces away from the display panel 11.

It should be understood that bonding, that is, bonding, is also referred to as bonding, and means a wire seating manner in a manufacturing and packaging process of a microelectronic device. For example, a metal wire (a gold wire or the like) may be used to complete a connection of an internal interconnection line of a solid-state circuit in the microelectronic device by using thermal pressing or ultrasonic energy. The process may include pressure welding, wire bonding, bonding, ball bonding, flat position welding, and the like. For example, the driver chip 12 is bonded to the display panel 11, that is, the driver chip 12 is physically fastened and electrically connected to the display panel in a manner of soldering or the like.

An avoidance hole 21 may be disposed on the middle frame 200, and an avoidance hole 51 may be disposed on the main board 500. The avoidance holes 21 and 51 correspond to positions of the electronic components 131 and the flexible cabling circuit board 15, to avoid the electronic components 131 and the flexible cabling circuit board 15, so that the electronic components 131 have larger layout space in a Z direction, and the flexible cabling circuit board 15 may extend from the flat cable circuit board 13 and be connected to the main board 500.

The display panel 11 may include a display part 111, a bending part 112, and a packaging part 113. The packaging part 113 may be bent to a back side of a light-emitting surface of the display part 111 by using the bending part 112. The display part 111 is configured to provide displaying for the electronic device. The packaging part 113 is configured to bond the driver chip 12 and the flat cable circuit board 13. The display panel 11 may be a flexible component made of a material such as a polyimide film. The packaging part 113 may be bent to the back side of the light-emitting surface of the display part 111, to reduce occupation of a length size and a width size of the electronic device.

The packaging part 113 may include a first end and a second end. The first end is an end that is of the packaging part 113 and that is away from the bending part 112, and the second end is an end that is of the packaging part 113 and that is connected to the bending part 112. It should be understood that a direction from the first end of the packaging part 113 to the second end may be defined as a wide edge direction of the packaging part 113, that is, an X direction in the figure.

It should be noted that the "first end" and the "second end" are two ends that are of a structure and that are away from each other in a preset direction, that is, the "first end" and the "second end" are concepts of one end and the other end that are opposite to each other, and do not mean "end faces" (that is, side walls) of a structure. For example, the first end and the second end of the packaging part 113 are respectively an end away from the bending part 112 and an end connected to the bending part 112, and do not mean end faces (that is, side walls) of the packaging part 113. In addition, it should be understood that the "first end" and the "second end" respectively mean areas that are of a specific length and that are located at two ends of the structure, and a distance between each of the first end and the second end and an end face is not limited. For example, the first end of the packaging part 113 may mean a range in which a distance from an end face that is of the packaging part 113 and that is away from the bending part 112 is within a first threshold, and the first threshold may be, for example, 0 mm to 10 mm.

For ease of description, an extension direction of a wide edge of the packaging part 113 may be defined as the direction from the first end of the packaging part 113 to the second end, that is, the X direction in the figure, and an edge that is of the packaging part 113 and that is opposite to the bending part 112 is a long edge of the packaging part 113, that is, a length direction of the flat cable circuit board 13 is a Y direction in the figure. In addition, length and width directions of the flat cable circuit board 13 and the flexible bonding circuit board 14 are the same as length and width directions of the packaging part 113. The length direction is also the Y direction in the figure, and the width direction is the X direction in the figure.

The flat cable circuit board 13 may be disposed on a surface that is of the packaging part 113 and that faces away from the display part 111, and the flat cable circuit board 13 may be disposed between the first end and the second end of the packaging part 113, that is, a full width of the flat cable circuit board 13 is located on the packaging part 113.

The flat cable circuit board 13 may be pasted to the packaging part 113 by using an adhesive, and the flat cable circuit board 13 may be bonded to the packaging part 113. A first bonding area 1131 may be disposed on the surface that is of the packaging part 113 and that faces away from the display part 111, and the first bonding area 1131 may be disposed at the first end of the packaging part 113.

In an embodiment, the flat cable circuit board 13 may be bonded to the first bonding area 1131 by using the flexible bonding circuit board 14. One end of the flexible bonding circuit board 14 may be connected to the flat cable circuit board 13, and the other end may be bonded to the first bonding area 1131. A second bonding area 1132 may be further disposed on the surface that is of the packaging part 113 and that faces away from the display part 111. The driver chip 12 may be bonded to the second bonding area 1132. The second bonding area 1132 may be disposed between the first bonding area 1131 and the bending part 112. There may be a spacing between the second bonding area 1132 and the first bonding area 1131, to avoid mutual interference.

In a possible implementation, the first bonding area 1131 may be disposed in a long strip shape, and a length of the first bonding area 1131 may be as large as possible on a basis that the length of the first bonding area 1131 is less than a length of the packaging part 113, to set a smaller width to implement a same bonding area. A position of the second bonding area 1132 may not be specifically limited. For example, the second bonding area 1132 may be disposed between the first bonding area 1131 and the bending part 112. A quantity of second bonding areas 1132 may depend on a quantity of driver chips 12, for example, may be 2.

The flat cable circuit board 13 may be a multilayer printed circuit board (Printed Circuit Board, PCB) or a multilayer flexible printed circuit (Flexible Printed Circuit, FPC). The flat cable circuit board 13 may have a plurality of wiring layers, and a quantity of wiring layers may be greater than or equal to 2, for example, may be 4 or 6. Increasing the quantity of wiring layers helps fully use space in a thickness direction of the electronic device, and reduces occupation of the length size and the width size of the electronic device.

The flexible bonding circuit board 14 may be a single-layer flexible printed circuit, to connect the flat cable circuit board 13 to the first bonding area 1131. The flexible bonding circuit board 14 may implement cabling from one wiring layer of the flat cable circuit board 13, and the flexible bonding circuit board 14 may implement cabling at a position that is on a side wall of the flat cable circuit board 13 and that corresponds to any wiring layer. A specific cabling position may not be limited.

In a scenario, a height (including a thickness of the driver chip 12 and a thickness of bonded solder) that is of the driver chip 12 and that is relative to the packaging part 113 is less than a height (including a thickness of the flat cable circuit board 13 and a thickness of the adhesive) that is of the flat cable circuit board 13 and that is relative to the packaging part 113.

In this case, the flexible bonding circuit board 14 implements cabling from an upper part of the flat cable circuit board 13, so that the flexible bonding circuit board 14 can cover the driver chip 12. A height that is of a cabling position of the flexible bonding circuit board 14 on the flat cable circuit board 13 and that is relative to the packaging part 113 is greater than or equal to the height that is of the driver chip 12 and that is relative to the packaging part 113. The driver chip 12 may be located between the flexible bonding circuit board 14 and the first bonding area 1131, and the driver chip 12 is located between the flat cable circuit board 13 and the packaging part 113.

In a possible implementation, the flexible bonding circuit board 14 may include an extension section 141, a transition section 142, and a bonding section 143 that are sequentially connected. The extension section 141 is connected to one wiring layer of the flat cable circuit board 13. The driver chip 12 is located below the extension section 141, and the bonding section 143 is bonded to the first bonding area 1131. The transition section 142 is disposed in a bent manner, to ensure a smooth transition between the extension section 141 and the bonding section 143, thereby ensuring soldering reliability of the bonding section 143.

In this embodiment of this application, a supporting component 144 may be further disposed. For example, the supporting component 144 may be made of a material such as foam. A height of the supporting component 144 is greater than the height of the driver chip 12. The supporting component 144 is located between the driver chip 12 and the first bonding area 1131. The supporting component 144 is configured to support the extension section 141, to prevent interference between the extension section 141 and the driver chip 12. In addition, a height of a joint between the extension section 141 and the flat cable circuit board 13 is the same as the height of the supporting component 144, and the supporting component 144 may ensure that the extension section 141 remains level.

Still refer to FIG. 4. The display module 100 may further include a metal plate 16 and a cover plate 17. The metal plate 16 may be attached to the back side of the light-emitting surface of the display part 111, to support the display module 100 and increase structural strength of the display module 100, and may be used as a ground terminal of the display module 100. The cover plate 17 is attached to the light-emitting surface of the display part 111, to protect the display part 111.

FIG. 5 is a simplified diagram of a structure of a display module according to a related technology. As shown in FIG. 5, in the related technology, the packaging part 113 may be bent to a back side of the display part 111 by using the bending part 112, the driver chip 12 is bonded to a side that is of the packaging part 113 and that faces away from the display part 111, and the flat cable circuit board 13 is located on a side of the packaging part 113, and is bonded to the packaging part 113 by using a flexible printed circuit. The flat cable circuit board 13 is located on a side that is of the packaging part 113 and that faces away from the bending part 112, and extends in a positive direction of an X-axis, and the flat cable circuit board 13 may be fastened to the main board 500 by using a board to board connector 50. In this case, an X-direction size occupied by the flat cable circuit board 13 is D1, and existence of D1 greatly affects space of the battery 400.

In a related technology, the electronic components 131 on the flat cable circuit board 13 are integrated to reduce layout areas of the components, to reduce D1. However, in this solution, the components need to be re-customized and developed, a cost is high, a current mature component cannot be shared, and many reliability problems need to be verified. In another related technology, the flat cable circuit board 13 may be disposed as a rigid-flexible board, to reduce cable layout space and reduce D1. However, in this solution, not only a cost is increased, but also process difficulty is high. In general, in the solution provided by the related technology, D1 can only be continuously reduced at a relatively high cost. In an extreme case, a design value of D1 is 6 mm, and cannot be reduced to 0.

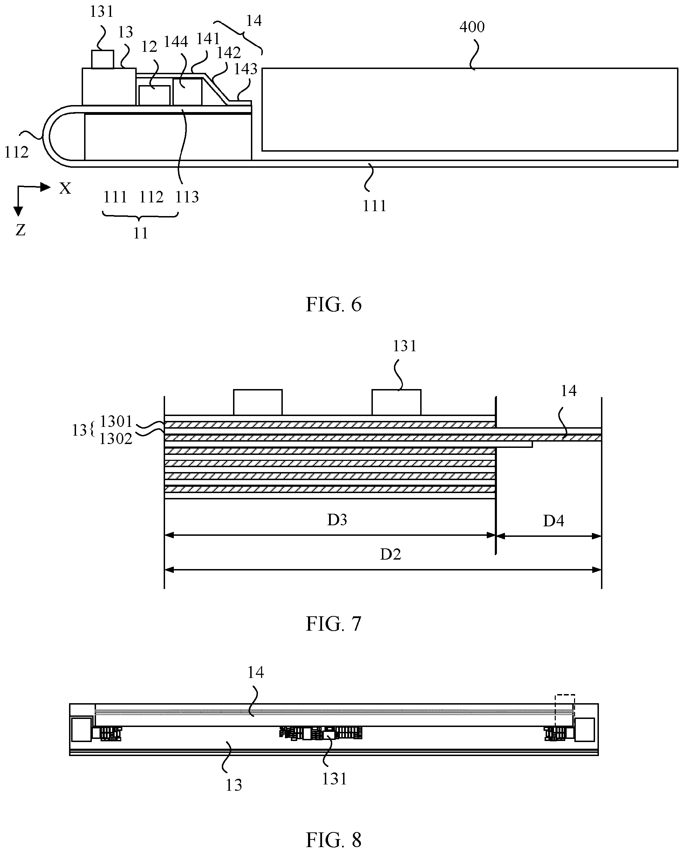

FIG. 6 is a simplified diagram of a structure of a display module according to an embodiment of this application. As shown in FIG. 6, in this embodiment of this application, the flat cable circuit board 13 is disposed as a multilayer circuit board, and is bonded to the first bonding area 1131 on the packaging part 113 by using the single-layer flexible bonding circuit board 14. Both the flat cable circuit board 13 and the flexible bonding circuit board 14 are disposed on the packaging part 113, so that both the flat cable circuit board 13 and the flexible bonding circuit board 14 are located between the first end and the second end of the packaging part 113. This is equivalent to that the flat cable circuit board 13 in the related technology in FIG. 5 is reversely arranged on the packaging part 113 in the X direction, so that space on the packaging part 113 may be used to a maximum extent. It can be learned from comparison with FIG. 5 that D1 in this embodiment of this application is reduced to 0. Therefore, the solution provided in this embodiment of this application can fully increase layout space of the battery 400.

In addition, it should be noted that an X-direction size occupied by the packaging part 113 is D2. When the size of the packaging part 113 remains unchanged, an area that can be occupied by the flat cable circuit board 13 is limited. In this embodiment of this application, the flat cable circuit board 13 is disposed as a multilayer board to increase a flat cable area. For example, the multilayer board may be a four-layer board. In a possible implementation, the X-direction size occupied by the packaging part 113 may be further reduced, to provide more space for the battery 400. In this case, a quantity of layers of the flat cable circuit board 13 may be adaptively increased, for example, the flat cable circuit board 13 may be disposed as a six-layer board, to ensure the flat cable area. It should be understood that, in the solution provided in this embodiment of this application, when an area of the packaging part 113 is smaller, an advantage of space utilization is more obvious.

FIG. 7 is a diagram of a bonding and cabling structure of a flat cable circuit board according to an embodiment of this application. As shown in FIG. 7, an overall width of the packaging part 113 may be D2, a width of the flat cable circuit board 13 may be D3, and a width of the flexible bonding circuit board 14 may be D4. The flat cable circuit board 13 is a multilayer circuit board, and includes a plurality of wiring layers 1301 and an insulation layer 1302 disposed between two adjacent wiring layers 1301. The flexible bonding circuit board 14 may be formed after cabling from one wiring layer 1301 of the flat cable circuit board 13. The wiring layer 1301 may be any wiring layer 1301 that is of the flat cable circuit board 13 and that is higher than the driver chip 12, to ensure that a cabling height is greater than the height of the driver chip 12, and prevent the flexible bonding circuit board 14 from interfering with the driver chip 12.

In addition, it should be understood that the cabling height of the flexible bonding circuit board 14 is related to a height of each wiring layer 1301 of the flat cable circuit board 13. When the cabling height of the flexible bonding circuit board 14 is slightly lower than the height of the driver chip 12, a height of the flat cable circuit board 13 may be raised by increasing a thickness of an adhesive between the flat cable circuit board 13 and the packaging part 113, to prevent the flexible bonding circuit board 14 from interfering with the driver chip 12.

Further, the wiring layer 1301 used for cabling may be a layer closest to the height of the driver chip 12, to reduce a mismatch between the extension section 141 and the bonding section 143, and avoid a problem of poor soldering caused by an excessively large mismatch. This solution helps effectively place the driver chip 12 by using Z-direction space of the flat cable circuit board 13, and a space layout is appropriate.

The bonding solution of the flat cable circuit board 13 provided in this embodiment of this application may be applicable to a case in which the thickness of the flat cable circuit board 13 is greater than the height of the driver chip 12. In a specific implementation, the flat cable circuit board 13 may be a six-layer board, a thickness of the six-layer board is about 0.35 mm, and the thickness of the driver chip 12 is about 0.25 mm.

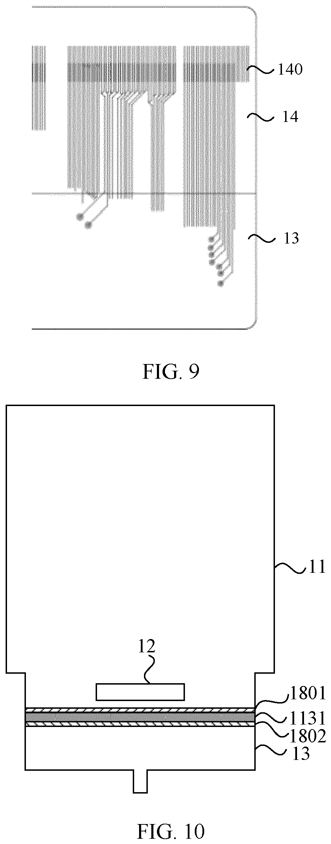

FIG. 8 is a top view of a packaging part according to an embodiment of this application. FIG. 9 is a diagram of wiring on a flexible bonding circuit board and a flat cable circuit board according to an embodiment of this application. FIG. 9 is an enlarged diagram of internal wiring in an area in a dashed-line box in FIG. 8. As shown in FIG. 8 and FIG. 9, a bonding pin 140 is disposed on the bonding section 143 of the flexible bonding circuit board 14, and is configured to be bonded to the first bonding area 1131. Wiring connected to the bonding pin 140 is disposed in a remaining area of the flexible bonding circuit board 14. An extension direction of the wiring is the same as a width direction of the flexible bonding circuit board 14. The wiring may be connected to a via and a flat cable in the flat cable circuit board 13, and wiring may be performed on all the plurality of wiring layers of the flat cable circuit board 13.

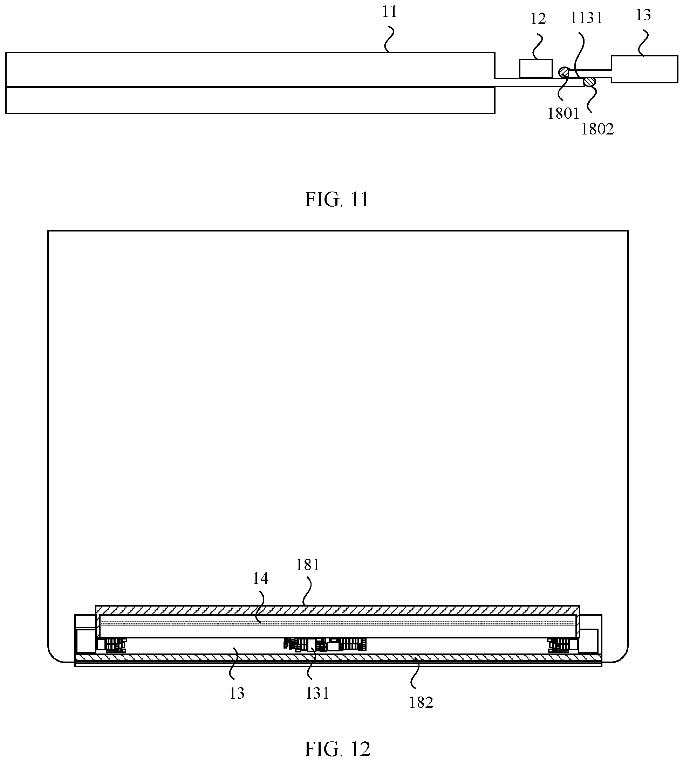

FIG. 10 is a schematic top view of a waterproof structure of a display module according to a related technology. FIG. 11 is a schematic side view of a waterproof structure of a display module according to a related technology. As shown in FIG. 10 and FIG. 11, in the related technology, a front adhesive 1801 and a back adhesive 1802 are respectively disposed on a front side (a light-emitting surface) and a back side (a back side of the light-emitting surface) of the first bonding area 1131, to implement waterproof protection for the flat cable circuit board 13.

FIG. 12 is a diagram of a waterproof structure of a display module according to an embodiment of this application. As shown in FIG. 12, in this embodiment of this application, a waterproof dispensed glue 181 may be disposed on edges of three sides (other than a side facing the bending part 112) of the flexible bonding circuit board 14, and the waterproof dispensed glue 181 may fill a gap (Z-direction space) between the flexible bonding circuit board 14 and the packaging part 113, to prevent liquid from entering below the flexible bonding circuit board 14, and prevent the liquid from damaging the flexible bonding circuit board 14 and the driver chip 12.

In addition, a waterproof back adhesive 182 may be disposed on an edge of a side that is of the packaging part 113 and that is close to the bending part 112. A length of the waterproof back adhesive 182 is the same as a length of the packaging part 113. The waterproof back adhesive 182 may fill Z-direction space between the packaging part 113 and the middle frame 200, to prevent external liquid from entering the packaging part 113, and prevent the liquid from damaging the flat cable circuit board 13.

The waterproof back adhesive 182 may be disposed at an end that is of the flat cable circuit board 13 and that is close to the bending part 112, and extend along a length direction of the flat cable circuit board 13. The waterproof back adhesive 182 may cover a full length of the flat cable circuit board 13. Projections that are of the waterproof dispensed glue 181 and the waterproof back adhesive 182 and that are on the packaging part 113 may form a closed pattern, that is, the waterproof dispensed glue 181 and the waterproof back adhesive 182 may jointly form complete sealing space, to provide overall waterproof protection for the packaging part 113 of the display module 100.

It should be noted that, in this embodiment of this application, the waterproof back adhesive 182 is disposed in a straight line, thanks to a design of the flexible cabling circuit board 15. The following describes a structure of the flexible cabling circuit board 15 with reference to an accompanying drawing and a specific embodiment.

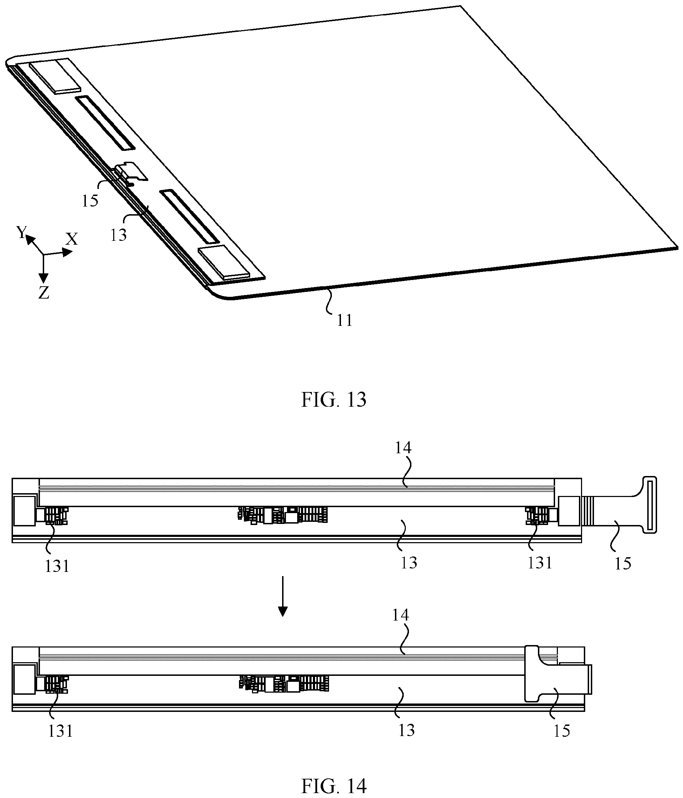

FIG. 13 is a diagram of a position of a flexible cabling circuit board according to a related technology. As shown in FIG. 13, in the related technology, the flexible cabling circuit board 15 is located in the middle of a long edge of the flat cable circuit board 13, and the long edge of the flat cable circuit board 13 is an edge that is of the flat cable circuit board 13 and that is opposite to the bending part 112.

Such a design causes the following problems: On the one hand, when cabling from the middle of the flat cable circuit board 13 is implemented, the board needs to be broken in the middle of the flat cable circuit board 13, and a relief needs to be added. In extreme architecture space, component layout space and cable layout space in X and Y directions are wasted, and are reflected in reduction of a battery capacity. On the other hand, when the flexible cabling circuit board 15 is located in the middle of the flat cable circuit board 13, a position of a board to board connector to which the flexible cabling circuit board 15 is correspondingly fastened is also in a middle area of the entire device. Due to the position, a part of the middle frame 200 also needs to be designed with a hole to avoid the flexible cabling circuit board 15, so that the flexible cabling circuit board 15 is fastened to the board to board connector. In a case of an extreme wall thickness of the middle frame 200, a middle hole has a great impact on both three-bar bending strength of the single middle frame and three-bar bending strength of the entire device, thereby reducing overall strength, and increasing a reliability risk.

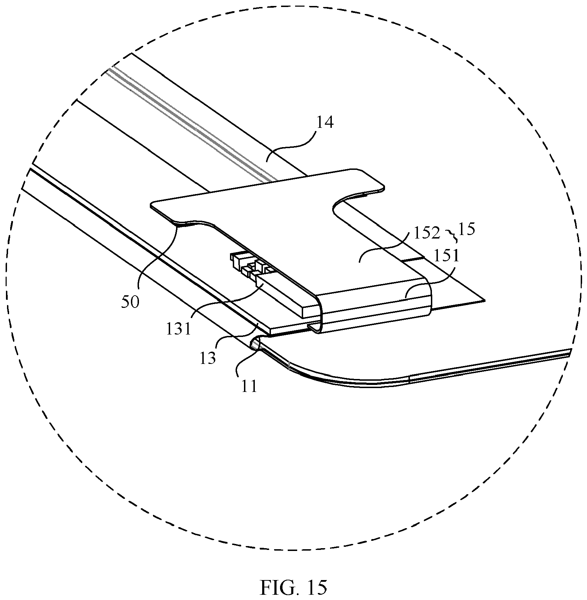

FIG. 14 is a diagram of a position of a flexible cabling circuit board according to an embodiment of this application. FIG. 14 shows a process of switching from an unfolded state to a bent state of the flexible cabling circuit board 15. FIG. 15 is an enlarged view of a structure in a dashed-line box in FIG. 3. As shown in FIG. 14 and FIG. 15, in this embodiment of this application, the flexible cabling circuit board 15 may be connected to a wide edge of the flat cable circuit board 13. It should be understood that a long edge of the flat cable circuit board 13 is an edge that is of the flat cable circuit board 13 and that is opposite to the bending part 112, the wide edge is an edge connected between two long edges, and an extension direction of the wide edge of the flat cable circuit board 13 is a direction from a side that is of the flat cable circuit board 13 and that is close to the bending part 112 to a side that is of the flat cable circuit board 13 and that is away from the bending part 112.

A plurality of electronic components 131, such as a fingerprint module chip, may be arranged on the flat cable circuit board 13. One end of the flexible cabling circuit board 15 may be connected to the flat cable circuit board 13, and the other end may be connected to the main board 500, so that an electrical connection between the display module 100 and the main board 500 may be implemented. The driver chip 12, the flat cable circuit board 13, the flexible bonding circuit board 14, and the flexible cabling circuit board 15 are all disposed on a back side of a light-emitting surface of the display panel 11, and the electronic components 131 are located on a side that is of the flat cable circuit board 13 and that faces away from the packaging part 113.

In this embodiment of this application, the flexible cabling circuit board 15 may be disposed as a single-layer flexible printed circuit or a multilayer flexible printed circuit. The flexible cabling circuit board 15 may implement cabling from any one or more wiring layers (1301) of the flat cable circuit board 13. For example, the flexible cabling circuit board 15 may be a two-layer flexible printed circuit. The flexible cabling circuit board 15 is disposed as a multilayer board, which may increase a cabling area.

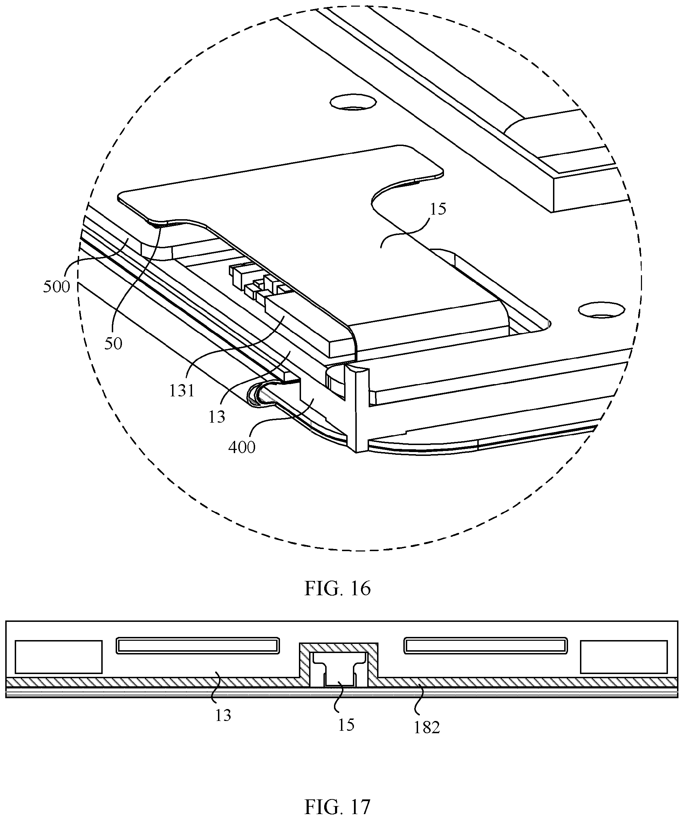

FIG. 16 is an enlarged view of a structure in a dashed-line box in FIG. 2. As shown in FIG. 15 and FIG. 16, one end of the flexible cabling circuit board 15 may extend from the wide edge of the flat cable circuit board 13, and the other end may be fastened to the main board 500 by using a BTB. The electronic components 131 may include components such as a touch control chip and an auxiliary capacitor. The electronic components 131 include solder, and may be soldered to an upper surface (a surface that is of the flat cable circuit board 13 and that faces away from the packaging part 113) of the flat cable circuit board 13 in a point soldering manner.

The flexible cabling circuit board 15 may implement cabling from any one or more wiring layers of the flat cable circuit board 13, for example, may implement cabling from a third layer of the flat cable circuit board 13. The flexible cabling circuit board 15 may include a connection section 151 and a main section 152. The main section 152 is bent to the side that is of the flat cable circuit board 13 and that faces away from the packaging part 113 by using the connection section 151, the connection section 151 is in a bent state, and the main section 152 is in a state of being parallel to the flat cable circuit board 13.

A height that is of the main section 152 and that is relative to the flat cable circuit board 13 may be greater than heights of the electronic components 131, so that the flexible cabling circuit board 15 does not interfere with the electronic components 131 below the flexible cabling circuit board 15.

In addition, an extreme design value of a distance (a Z-direction height size) between a lower surface of the flexible cabling circuit board 15 (a surface facing the flat cable circuit board 13 in a state shown in FIG. 15 and FIG. 16) and an upper surface of the flat cable circuit board 13, that is, an extreme design value of a distance between the flexible cabling circuit board 15 and the flat cable circuit board 13, is a sum of extreme values of a design gap, a thickness of the middle frame 200, a thickness of the main board 500, and a configuration height of the BTB. An extreme value of the design gap may be 0, or may be set to 0.2 mm. A wall thickness extreme of the middle frame 200 is designed to be 0. An extreme design value of the thickness of the main board 500 is 0.5 mm. A conventional extreme working height of the BTB is 0.66 mm. Therefore, an extreme value of the distance is greater than or equal to 1.36 mm. The size determines a bending radius (that is, a size of the connection section 151) of cabling of the flexible cabling circuit board 15, and the size needs to be not less than a height of each electronic component 131.

In extreme design space (a scenario in which a thickness of the entire device is less than 5.5 mm), the main board 500 needs to be broken in an area that corresponds to the electronic components 131 and that is on the main board 500, that is, an avoidance hole needs to be designed to avoid interference with the electronic components 131. In this embodiment of this application, the plurality of electronic components 131 may be designed in an aggregate manner. For example, as shown in FIG. 14, some electronic components may be placed at left and right ends of the flat cable circuit board 13, and remaining components are placed in the middle. The component integration design enables the main board 500 to have a minimum broken board area, and has a least impact on cable layout space and component layout space on the main board 500.

FIG. 17 is a diagram of a waterproofing solution corresponding to a flexible cabling circuit board according to a related technology. As shown in FIG. 17, in the related technology, when the flexible cabling circuit board 15 implements cabling from a middle part of a long edge of the flat cable circuit board 13, a waterproof path of the entire device at a middle cabling position needs to implement overall space avoidance, as shown by a waterproof back adhesive 182 in the figure. Because the waterproof back adhesive 182 needs to implement avoidance at the cabling position, the waterproof path needs to be bent instead of being a straight line. According to a principle that a straight line is a shortest distance between two points, a waste of waterproof space is caused, difficulty of glue dispensing is increased, and a cost is increased. Therefore, the middle cabling solution greatly affects product competitiveness.

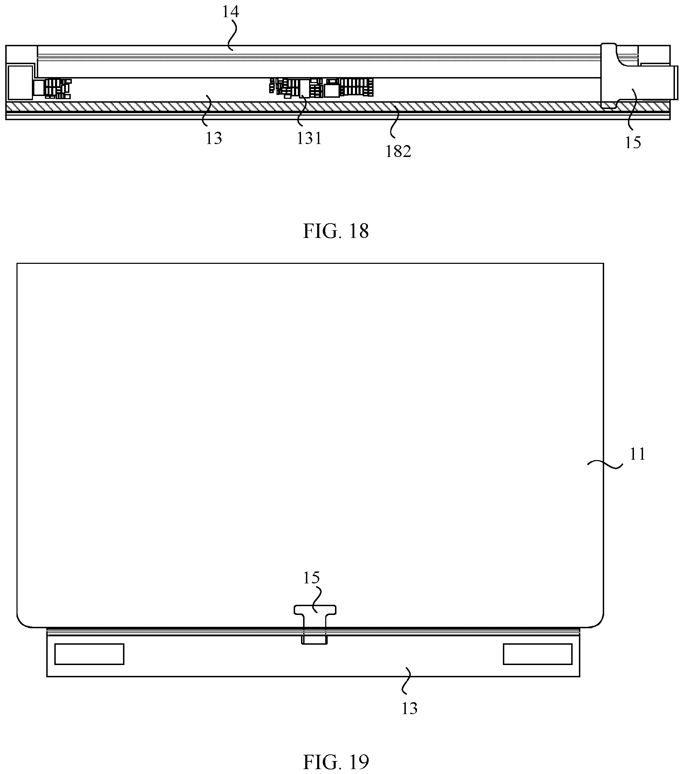

FIG. 18 is a diagram of a waterproofing solution corresponding to a flexible cabling circuit board according to an embodiment of this application. As shown in FIG. 18, in this embodiment of this application, because the flexible cabling circuit board 15 is disposed on a wide edge of the flat cable circuit board 13, the flexible cabling circuit board 15 does not affect disposing of a waterproof back adhesive 182, and the waterproof back adhesive 182 may be disposed in a straight line, so that a defect caused by middle cabling of the related technology can be resolved.

In addition, the middle cabling solution provided in the related technology is not conducive to assembly of the display module 100. FIG. 19 is a diagram of an unfolded structure of a packaging part according to a related technology. As shown in FIG. 19, it should be understood that a process of assembling the display module 100 is generally as follows: First, the driver chip 12 and the flat cable circuit board 13 are bonded to the packaging part 113 of the display panel 11, and then components such as an optical clear adhesive and the cover plate 17 are attached. After the flat cable circuit board 13 is bonded, the flexible cabling circuit board 15 enters the display part 111, and consequently, a subsequent process cannot be implemented due to an interference problem, thereby affecting a subsequent attaching process and a test process of the display module 100.

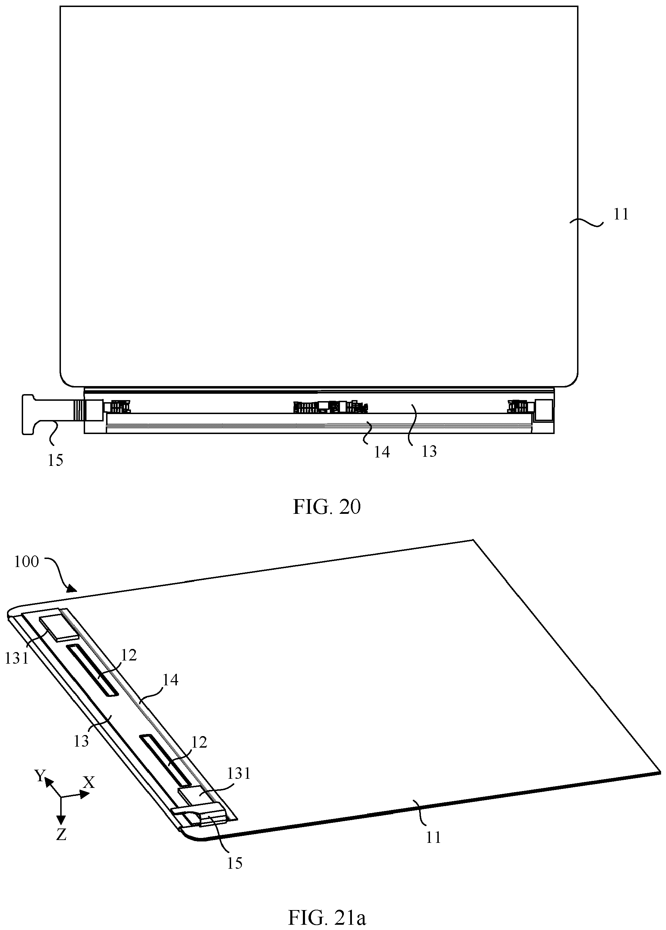

FIG. 20 is a diagram of an unfolded structure of a packaging part according to an embodiment of this application. As shown in FIG. 20, in this embodiment of this application, because the flexible cabling circuit board 15 is disposed on a wide edge of the flat cable circuit board 13, in a process of assembling the display module 100, the flexible cabling circuit board 15 does not enter the display part 111. Therefore, the process of assembling the display module 100 is not affected.

In general, the process of assembling the display module provided in this embodiment of this application may include the following steps: First, the driver chip 12 is bonded to the second bonding area 1132 in the packaging part 113; then, the flat cable circuit board 13 is pasted to the packaging part 113 by using a waterproof back adhesive, and the flexible bonding circuit board 14 is bonded to the first bonding area 1131; and then, the cover plate 17 is attached to the light-emitting surface of the display part 111.

It should be understood that the packaging part 113 is bent to the back side of the light-emitting surface of the display part 111 by using the bending part 112. This process may be performed in a process of assembling the display module 100 to the middle frame 200. A process of fastening an end of the flexible cabling circuit board 15 to the main board 500 by using a BTB may be performed after the display module 100, the middle frame 200, and the main board 500 are assembled.

In the embodiments provided in FIG. 2 to FIG. 9, the multilayer flat cable circuit board 13 is bonded to the first bonding area 1131 by using the single-layer flexible bonding circuit board 14, the driver chip 12 is located between the first bonding area 1131 and the flat cable circuit board 13, and the flexible bonding circuit board 14 implements cabling from the upper part of the flat cable circuit board 13, and is disposed above the driver chip 12 by using a supporting function of the supporting component 144.

In another embodiment, the multilayer flat cable circuit board 13 may also be bonded to the first bonding area 1131 by using the single-layer flexible bonding circuit board 14, and a through hole or a blind hole for accommodating the driver chip 12 may be disposed on the flat cable circuit board 13, to fully use an area of the packaging part 113 and increase an area of the flat cable circuit board 13. With reference to specific accompanying drawings, the following describes solutions provided in embodiments of this application.

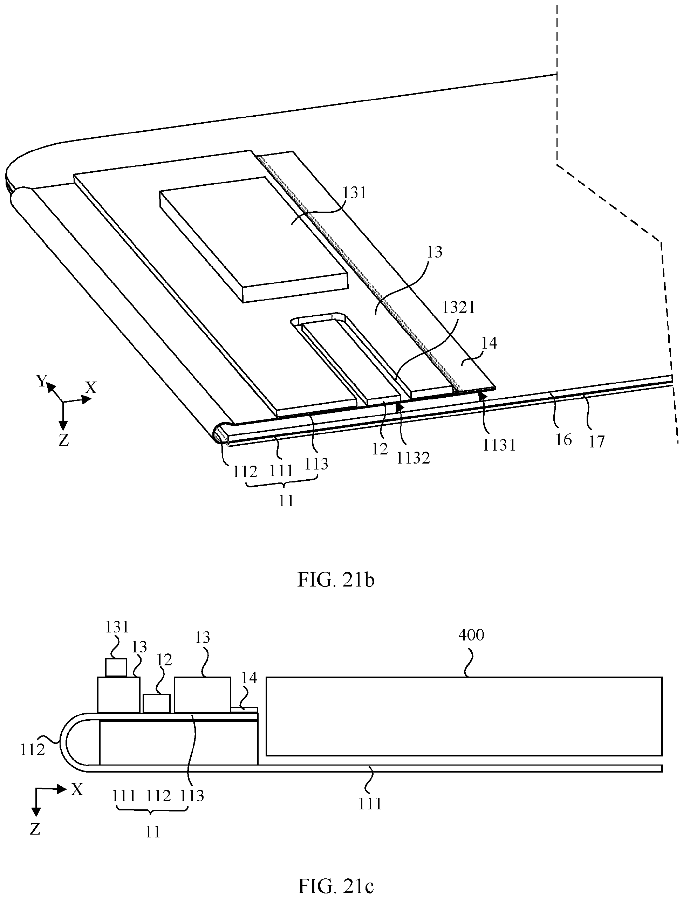

FIG. 21a is a diagram of a structure of a display module according to an embodiment of this application. FIG. 21b is a diagram of a partial cross section of a display module according to an embodiment of this application. As shown in FIG. 21a and FIG. 21b, a display module 100 may include a display panel 11, a driver chip 12, a flat cable circuit board 13, a flexible bonding circuit board 14, and a flexible cabling circuit board 15. For specific structures of the display panel 11 and the flexible cabling circuit board 15, refer to the descriptions in the foregoing embodiments. Details are not described herein.

In this embodiment of this application, the flat cable circuit board 13 may be a multilayer printed circuit board or a multilayer flexible printed circuit, and the flexible bonding circuit board 14 may be a single-layer flexible printed circuit. One end of the flexible bonding circuit board 14 may be connected to the flat cable circuit board 13, and the other end is bonded to a first bonding area 1131 on a packaging part 113. A through hole 1321 may be disposed on the flat cable circuit board 13, a second bonding area 1132 is disposed in an area that corresponds to the through hole 1321 and that is on the packaging part 113, and the driver chip 12 may be disposed in the through hole 1321 and bonded to the second bonding area 1132.

The first bonding area 1131 may be disposed at an end that is of the packaging part 113 and that is away from a bending part 112, the first bonding area 1131 may be disposed in a long strip shape, and there may be two second bonding areas 1132. An area of the through hole 1321 may be slightly greater than an area of the driver chip 12, to avoid interference between the driver chip 12 and the flat cable circuit board 13. The through hole 1321 is disposed on the flat cable circuit board 13 to arrange the driver chip 12, and this helps increase an area of the flat cable circuit board 13 or reduce an area of the packaging part 113.

FIG. 21c is a simplified diagram of a structure of a display module according to an embodiment of this application. As shown in FIG. 21c, in this embodiment of this application, the flat cable circuit board 13 is disposed as a multilayer circuit board, and is bonded to the first bonding area 1131 on the packaging part 113 by using the single-layer flexible bonding circuit board 14. Both the flat cable circuit board 13 and the flexible bonding circuit board 14 are disposed between a first end and a second end of the packaging part 113, so that space on the packaging part 113 may be used to a maximum extent. It can be learned from comparison with FIG. 5 that D1 in this embodiment of this application is reduced to 0. Therefore, the solution provided in this embodiment of this application can fully increase layout space of a battery 400.

The embodiments shown in FIG. 21a to FIG. 21c are applicable to many scenarios, and a relationship between a height (including a thickness of the driver chip 12 and a thickness of bonded solder) that is of the driver chip 12 and that is relative to the packaging part 113 and a height (including a thickness of the flat cable circuit board 13 and a thickness of an adhesive) that is of the flat cable circuit board 13 and that is relative to the packaging part 113 may not be limited.

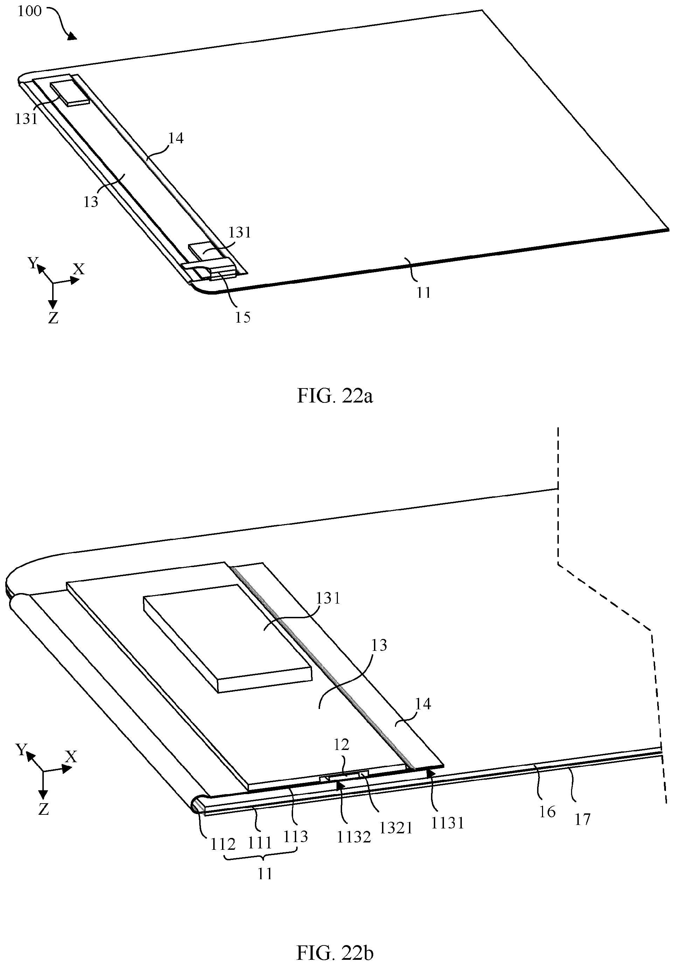

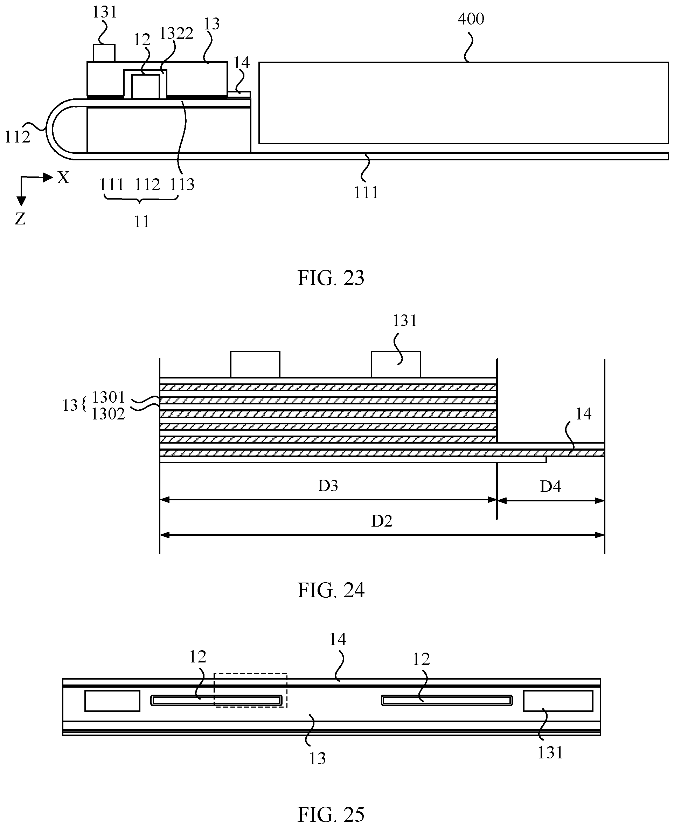

FIG. 22a is a diagram of a structure of a display module according to an embodiment of this application. FIG. 22b is a diagram of a partial cross section of a display module according to an embodiment of this application. FIG. 23 is a simplified diagram of a structure of a display module according to an embodiment of this application. As shown in FIG. 22a to FIG. 23, for a solution in which the flexible bonding circuit board 14 is used for bonding and a hole is disposed on the flat cable circuit board 13, in another implementation, a blind hole 1322 may be disposed on the flat cable circuit board 13, the driver chip 12 is located in the blind hole 1322, and an opening of the blind hole 1322 is disposed facing the flat cable circuit board 13.

It can be seen from FIG. 23 that a sum of a depth of the blind hole 1322 and a thickness of an adhesive (a black filled area in the figure) is greater than or equal to a height that is of the driver chip 12 and that is relative to the packaging part 113, to avoid interference between a bottom wall of the blind hole 1322 and the driver chip 12. It should be understood that the depth of the blind hole 1322 is related to a height of each wiring layer 1301 of the flat cable circuit board 13. When the depth of the blind hole 1322 is slightly lower than the height of the driver chip 12, a height of the flat cable circuit board 13 may be raised by increasing a thickness of an adhesive between the flat cable circuit board 13 and the packaging part 113, to prevent the flexible bonding circuit board 14 from interfering with the driver chip 12.

It should be understood that the blind hole 1322 is disposed to accommodate the driver chip 12, and is more applicable to a solution in which the thickness of the driver chip 12 is less than the thickness of the flat cable circuit board 13. The blind hole 1322 is disposed to accommodate the driver chip 12, so that a wiring layer can still be arranged in an area above the blind hole 1322, thereby increasing a wiring area.

Embodiments shown in FIG. 22a to FIG. 30 may be applicable to a scenario in which the height (including the thickness of the driver chip 12 and the thickness of the bonded solder) that is of the driver chip 12 and that is relative to the packaging part 113 is less than the height (including the thickness of the flat cable circuit board 13 and the thickness of the adhesive) that is of the flat cable circuit board 13 and that is relative to the packaging part 113.

FIG. 24 is a diagram of a bonding and cabling structure of a flat cable circuit board according to an embodiment of this application. As shown in FIG. 24, an overall width of the packaging part 113 may be D2, a width of the flat cable circuit board 13 may be D3, and a width of the flexible bonding circuit board 14 may be D4. The flat cable circuit board 13 is a multilayer circuit board, and includes a plurality of wiring layers 1301 and an insulation layer 1302. The flexible bonding circuit board 14 may be formed after cabling from one wiring layer 1301 of the flat cable circuit board 13. The wiring layer 1301 may be a bottom wiring layer (a wiring layer 1301 closest to the packaging part 113) of the flat cable circuit board 13, to avoid a problem of poor soldering caused by an excessively large mismatch.

This solution helps effectively place the driver chip 12 by using Z-direction space of the flat cable circuit board 13, and a space layout is appropriate. The through hole solution of the flat cable circuit board 13 provided in this embodiment of this application is applicable to a case in which the thickness of the flat cable circuit board 13 is less than or equal to the height of the driver chip 12. The blind hole solution of the flat cable circuit board 13 provided in this embodiment of this application is applicable to a case in which the thickness of the flat cable circuit board 13 is greater than the height of the driver chip 12. In addition, the flat cable circuit board 13 is relatively wide, thereby facilitating a cable layout and a component. In a specific implementation, the flat cable circuit board 13 may be a four-layer board, a thickness of the four-layer board is about 0.35 mm, and the thickness of the driver chip 12 is about 0.25 mm.

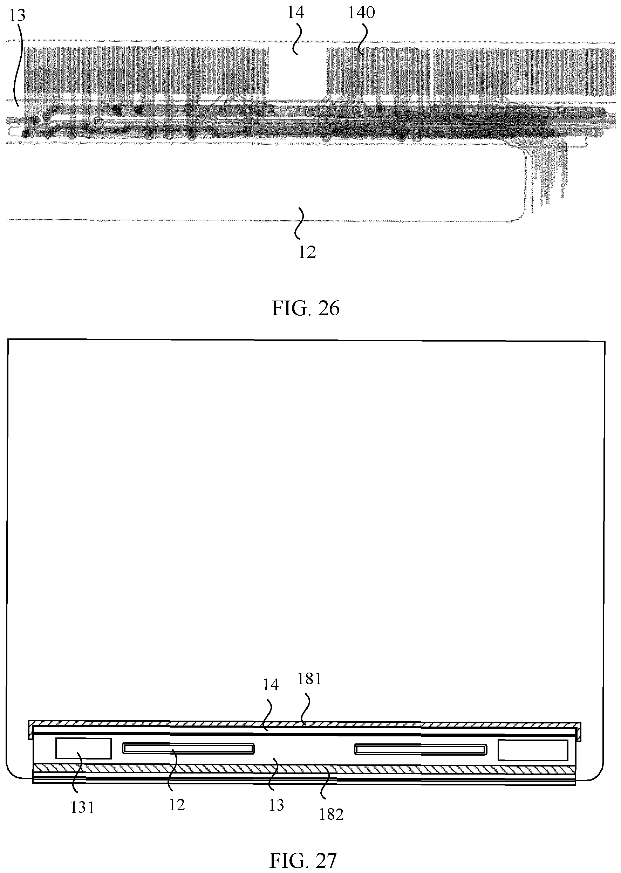

FIG. 25 is a top view of a packaging part according to an embodiment of this application. FIG. 26 is a diagram of wiring on a flexible bonding circuit board and a flat cable circuit board according to an embodiment of this application. FIG. 26 is an enlarged diagram of internal wiring in an area in a dashed-line box in FIG. 25. As shown in FIG. 25 and FIG. 26, a bonding pin 140 may be disposed on the flexible bonding circuit board 14, and is configured to be bonded to the first bonding area 1131. Wiring connected to the bonding pin 140 is disposed in a remaining area of the flexible bonding circuit board 14. An extension direction of the wiring is the same as a width direction of the flexible bonding circuit board 140. The wiring may be connected to a via and a flat cable in the flat cable circuit board 13, and wiring may be performed on all the plurality of wiring layers of the flat cable circuit board 13.

FIG. 27 is a diagram of a waterproof structure of a display module according to an embodiment of this application. As shown in FIG. 27, in this embodiment of this application, a waterproof dispensed glue 181 may be disposed on edges of three sides (other than a side facing the bending part 112) of the flexible bonding circuit board 14, and the waterproof dispensed glue 181 may fill Z-direction space between the flexible bonding circuit board 14 and the packaging part 113, to prevent liquid from entering below the flexible bonding circuit board 14, and prevent the liquid from damaging the flexible bonding circuit board 14.

In addition, a waterproof back adhesive 182 may be disposed on an edge of a side that is of the packaging part 113 and that is close to the bending part 112. A length of the waterproof back adhesive 182 is the same as a length of the packaging part 113. The waterproof back adhesive 182 may fill Z-direction space between the packaging part 113 and the middle frame 200, to prevent external liquid from entering the packaging part 113, and prevent the liquid from damaging the flat cable circuit board 13 and the driver chip 12. The waterproof dispensed glue 181 and the waterproof back adhesive 182 may jointly form complete sealing space, to provide overall waterproof protection for the packaging part 113 of the display module 100.

It should be noted that, in this embodiment of this application, the waterproof back adhesive 182 is disposed in a straight line, thanks to a design of the flexible cabling circuit board 15. For a structure of the flexible cabling circuit board 15, refer to the foregoing description. Details are not described herein.

In the embodiments provided in FIG. 21 to FIG. 27, the multilayer flat cable circuit board 13 is bonded to the first bonding area 1131 by using the single-layer flexible bonding circuit board 14, the flexible bonding circuit board 14 implements cabling from a lower part of the flat cable circuit board 13, and the driver chip 12 is located in the through hole 1321 in the flat cable circuit board 13.

In another embodiment, the multilayer flat cable circuit board 13 may be bonded to the first bonding area 1131 by using a wiring layer of a partial area of the multilayer flat cable circuit board 13. With reference to specific accompanying drawings, the following describes solutions provided in embodiments of this application.

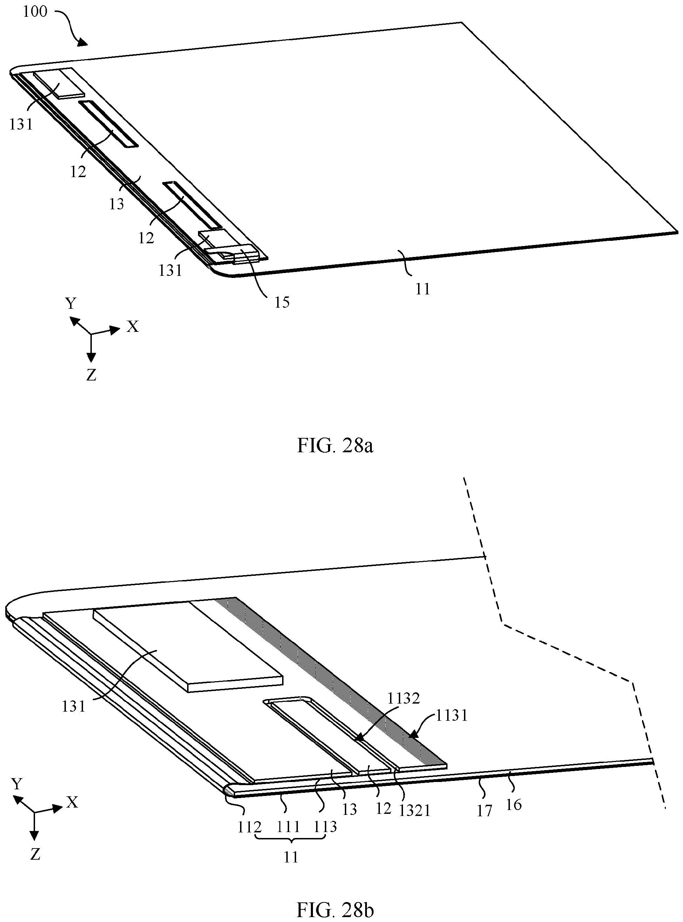

FIG. 28a is a diagram of a structure of a display module according to an embodiment of this application. FIG. 28b is a diagram of a partial cross section of a display module according to an embodiment of this application. As shown in FIG. 28a and FIG. 28b, in this embodiment of this application, a display module 100 may include a display panel 11, a driver chip 12, a flat cable circuit board 13, and a flexible cabling circuit board 15. For specific structures of the display panel 11 and the flexible cabling circuit board 15, refer to the descriptions in the foregoing embodiments. Details are not described herein.

In this embodiment of this application, a first bonding area 1131 may be disposed on a surface that is of a packaging part 113 and that faces away from a display part 111. The first bonding area 1131 may be located at a first end of the packaging part 113. The flat cable circuit board 13 may be located between the first end and a second end of the packaging part 113. A partial area of the flat cable circuit board 13 may be bonded to the packaging part 113 by using the first bonding area 1131. An area that is of the flat cable circuit board 13 and that is other than the area bonded to the first bonding area 1131 may be pasted to the packaging part 113 by using an adhesive. The flat cable circuit board 13 may be a multilayer printed circuit board or a multilayer flexible printed circuit, to fully use space in a thickness direction of an electronic device, and reduce occupation of a length size and a width size of the electronic device.

A second bonding area 1132 may be further disposed on the surface that is of the packaging part 113 and that faces away from the display part 111. The driver chip 12 may be bonded to the second bonding area 1132. In a possible implementation, the first bonding area 1131 may be disposed at an end that is of the packaging part 113 and that is away from a bending part 112, and the first bonding area 1131 may be disposed in a long strip shape. A through hole 1321 may be disposed on the flat cable circuit board 13, the second bonding area 1132 is disposed in an area corresponding to the through hole 1321, and the driver chip 12 may be disposed in the through hole 1321.

An area of the through hole 1321 is slightly greater than an area of the driver chip 12, to avoid interference between the driver chip 12 and the flat cable circuit board 13. The through hole 1321 is disposed on the flat cable circuit board 13 to arrange the driver chip 12, so that a layout is more compact, compared with a layout manner such as a manner in which the flat cable circuit board 13 and the driver chip 12 are disposed side by side. This helps reduce an area of the packaging part 113.

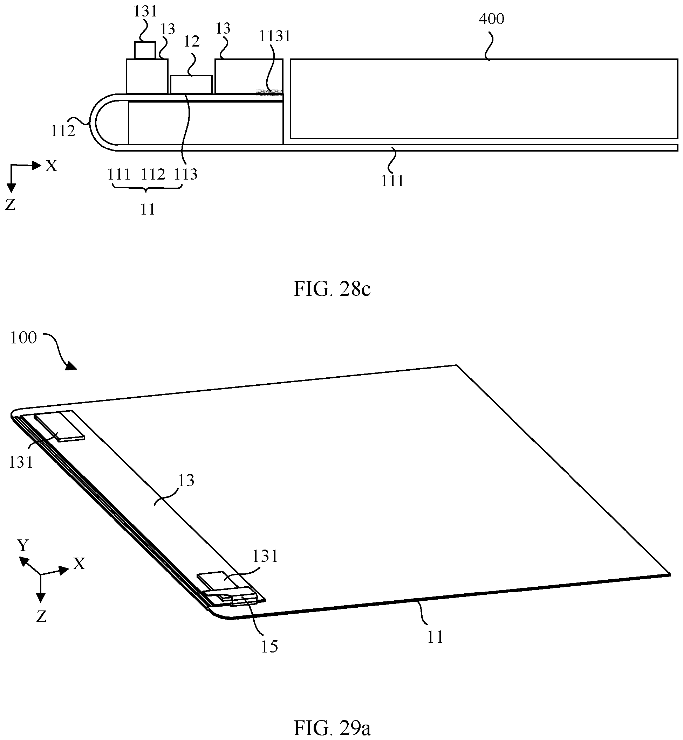

FIG. 28c is a simplified diagram of a structure of a display module according to an embodiment of this application. In this embodiment of this application, a full width of the flat cable circuit board 13 is correspondingly disposed on the packaging part 113, and a partial area of an end part of the flat cable circuit board 13 is used to be bonded to the first bonding area 1131 on the packaging part 113. A part of the flat cable circuit board 13 is used for bonding, so that space on the packaging part 113 may be used to a maximum extent. It can be learned from comparison with FIG. 5 that D1 in this embodiment of this application is reduced to 0. Therefore, the solution provided in this embodiment of this application can fully increase layout space of a battery 400.

In addition, it should be noted that an X-direction size occupied by the packaging part 113 is D2. When the size of the packaging part 113 remains unchanged, an area that can be occupied by the flat cable circuit board 13 is limited. In this embodiment of this application, the flat cable circuit board 13 is disposed as a multilayer board to increase a flat cable area. For example, the multilayer board may be a four-layer board or a six-layer board. In a possible implementation, the X-direction size occupied by the packaging part 113 may be further reduced, to provide more space for the battery 400. In this case, a quantity of layers of the flat cable circuit board 13 may be adaptively increased, to ensure the flat cable area. Therefore, in the solution provided in this embodiment of this application, when an area of the packaging part 113 is smaller, an advantage of space utilization is more obvious.

In this embodiment of this application, the flat cable circuit board 13 is disposed as a multilayer circuit board, and is bonded by using a part of a structure of the flat cable circuit board 13. This may further increase a cable layout area of the flat cable circuit board 13 and improve the space utilization, compared with a solution in which a single-layer circuit board is additionally disposed for bonding.

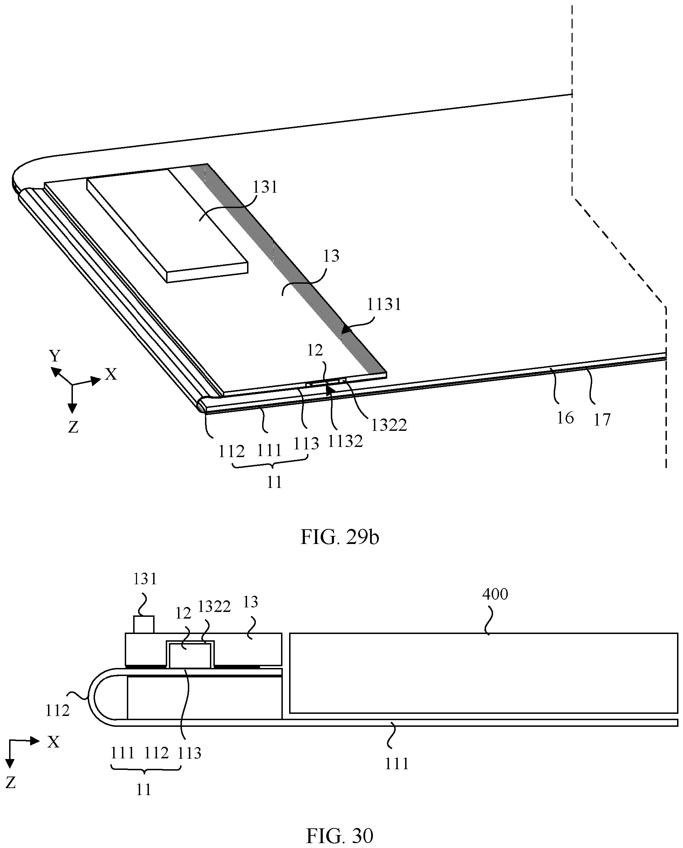

FIG. 29a is a diagram of a structure of a display module according to an embodiment of this application. FIG. 29b is a diagram of a partial cross section of a display module according to an embodiment of this application. FIG. 30 is a simplified diagram of a structure of a display module according to an embodiment of this application. As shown in FIG. 29a to FIG. 30, for a solution in which a partial area of the flat cable circuit board 13 is used for bonding, in another implementation, a blind hole 1322 may be disposed on the flat cable circuit board 13, and the driver chip 12 is located in the blind hole 1322.

It can be seen from FIG. 30 that a sum of a depth of the blind hole 1322 and a thickness of an adhesive (a black filled area in the figure) is greater than or equal to a height that is of the driver chip 12 and that is relative to the packaging part 113, to avoid interference between a bottom wall of the blind hole 1322 and the driver chip 12. It should be understood that the depth of the blind hole 1322 is related to a height of each wiring layer 1301 of the flat cable circuit board 13. When the depth of the blind hole 1322 is slightly lower than the height of the driver chip 12, a height of the flat cable circuit board 13 may be raised by increasing a thickness of an adhesive between the flat cable circuit board 13 and the packaging part 113, to prevent the flexible bonding circuit board 14 from interfering with the driver chip 12.

It should be understood that the blind hole 1322 is disposed to accommodate the driver chip 12, and is more applicable to a solution in which a thickness of the driver chip 12 is less than a thickness of the flat cable circuit board 13. The blind hole 1322 is disposed to accommodate the driver chip 12, so that a wiring layer can still be arranged in an area above the blind hole 1322, thereby increasing a wiring area.

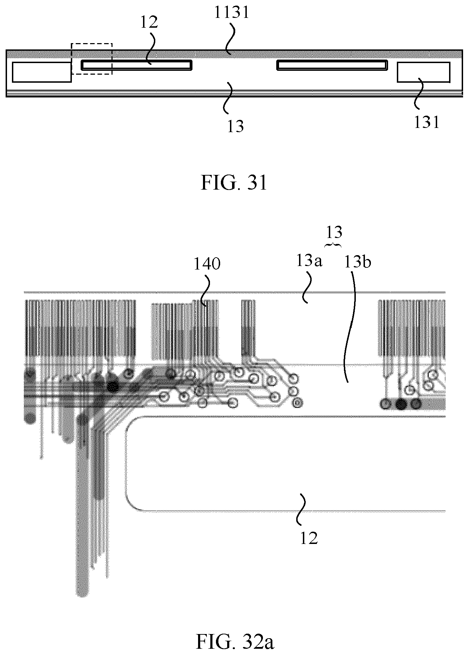

FIG. 31 is a top view of a packaging part according to an embodiment of this application. FIG. 32a is a diagram of wiring on a flexible bonding circuit board and a flat cable circuit board according to an embodiment of this application. FIG. 32a is an enlarged diagram of internal wiring in an area in a dashed-line box in FIG. 31. As shown in FIG. 31 and FIG. 32a, the flat cable circuit board 13 may be divided into a first zone 13a and a second zone 13b. The first zone 13a corresponds to the first bonding area 1131. A bonding pin 140 may be disposed in the first zone 13a to be bonded to the first bonding area 1131. The bonding pin 140 is located on a wiring layer that is of the flat cable circuit board 13 and that is closest to the packaging part 113, that is, located on a bottom wiring layer of the flat cable circuit board 13. The second zone 13b may be attached to the packaging part 113 by using an adhesive.

In a possible implementation, only the bonding pin 140 is disposed in the first zone 13a that corresponds to the first bonding area 1131 and that is on the flat cable circuit board 13, and no other wiring or via is disposed. Wiring and a via may be disposed in an area that is of the flat cable circuit board 13 and that is other than an area corresponding to the first bonding area 1131, that is, may be disposed in the second zone 13b, and a wiring path needs to avoid the driver chip 12. In this case, the bonding pin 140 may be connected to wiring on a bottom wiring layer in the second zone 13b.

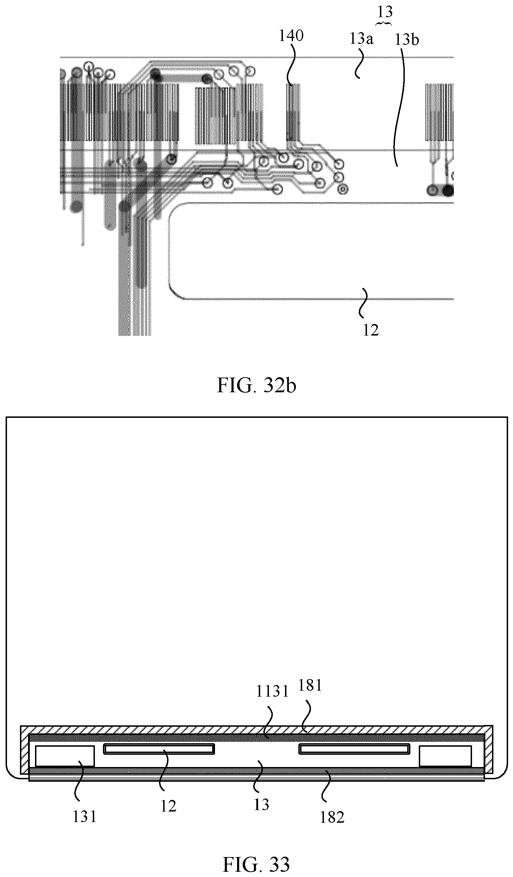

FIG. 32b is another diagram of wiring on a flat cable circuit board according to an embodiment of this application. FIG. 32b is an enlarged diagram of internal wiring in an area in a dashed-line box in FIG. 31. As shown in FIG. 32b, in another possible implementation, the flat cable circuit board 13 may be divided into a first zone 13a and a second zone 13b. The first zone 13a corresponds to the first bonding area 1131. A bonding pin 140 is disposed in the first zone 13a to be bonded to the first bonding area 1131. The bonding pin 140 is located on a wiring layer that is of the flat cable circuit board 13 and that is closest to the packaging part 113, that is, located on a bottom wiring layer of the flat cable circuit board 13.

In addition, wiring and a via may be disposed on a wiring layer that is in the first zone 13a and that is other than the bottom wiring layer. In this case, the bonding pin 140 may be connected to wiring on a non-bottom wiring layer in the first zone 13a by using the via or in another manner. In this way, an area of a wiring layer of the flat cable circuit board 13 may be fully used, and cable layout space may be increased. In addition, similarly, wiring and a via that are disposed in the second zone 13b should avoid the driver chip 12.

FIG. 33 is a diagram of a waterproof structure of a display module according to an embodiment of this application. As shown in FIG. 33, in this embodiment of this application, a waterproof dispensed glue 181 may be disposed on edges of three sides (other than a side facing the bending part 112) of the first bonding area 1131, and the waterproof dispensed glue 181 may fill Z-direction space between the flat cable circuit board 13 and the packaging part 113, to prevent liquid from entering the first bonding area 1131, and prevent the liquid from damaging the first bonding area 1131. It should be understood that the waterproof dispensed glue 181 may also cover edges of three sides of the flat cable circuit board 13 other than a side facing the bending part 112.

In addition, a waterproof back adhesive 182 may be disposed on an edge of a side that is of the packaging part 113 and that is close to the bending part 112. A length of the waterproof back adhesive 182 is the same as a length of the packaging part 113. The waterproof back adhesive 182 may fill Z-direction space between the packaging part 113 and the middle frame 200, to prevent external liquid from entering the packaging part 113, and prevent the liquid from damaging the flat cable circuit board 13 and the driver chip 12. The waterproof dispensed glue 181 and the waterproof back adhesive 182 may jointly form complete sealing space, to provide overall waterproof protection for the packaging part 113 of the display module 100.

It should be noted that, in this embodiment of this application, the waterproof back adhesive 182 is disposed in a straight line, thanks to a design of the flexible cabling circuit board 15. For a structure of the flexible cabling circuit board 15, refer to the foregoing description. Details are not described herein.

Based on the foregoing embodiments of this application, embodiments of this application further provide several implementations of a grounding structure of the display module 100. With reference to accompanying drawings, the following describes the grounding structure of the display module 100 provided in embodiments of this application.

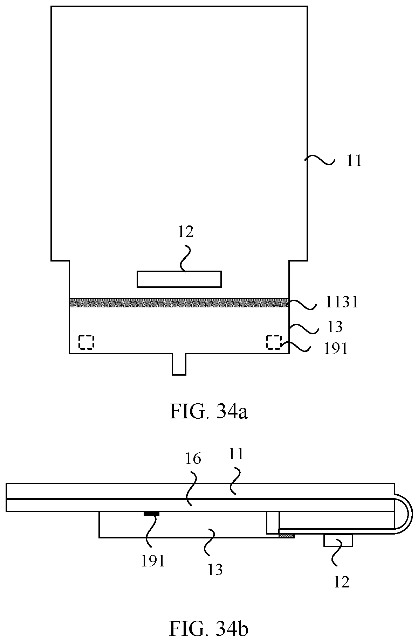

FIG. 34a is a top view of a display module in which a display panel is in an unfolded state according to a related technology. FIG. 34b is a side sectional view of a display module in which a display panel is in a bent state according to a related technology. As shown in FIG. 34a and FIG. 34b, in the related technology, a ground point 191 may be disposed on a side that is of the flat cable circuit board 13 and that faces the light-emitting surface of the display part (in the bent state). The ground point 191 may be formed after a copper leakage design is performed on a surface of the flat cable circuit board 13. After the display panel 11 is bent, the ground point 191 may be in contact with the metal plate 16 for conduction, thereby implementing grounding.

It is not difficult to understand that, in this embodiment of this application, after the display panel 11 is bent, the flat cable circuit board 13 and the metal plate 16 are separated by the packaging part 113. Therefore, if the ground point 191 is directly disposed on the side that is of the flat cable circuit board 13 and that faces the light-emitting surface of the display part, the ground point 191 cannot be directly connected to the metal plate 16. Therefore, the grounding structure of the display module 100 provided in the related technology is not applicable to this application.

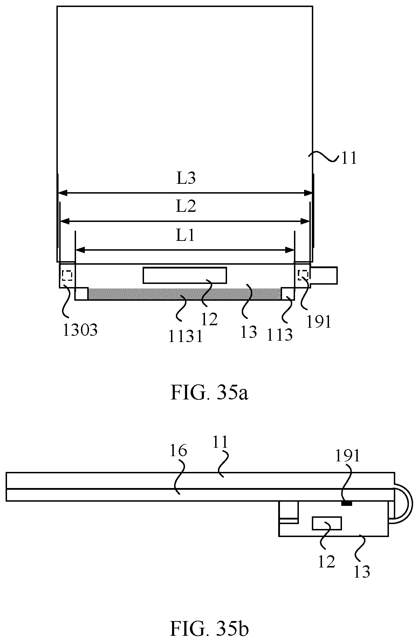

FIG. 35a is a top view of a display module in which a display panel is in an unfolded state according to an embodiment of this application. FIG. 35b is a side sectional view of a display module in which a display panel is in a bent state according to an embodiment of this application. As shown in FIG. 35a and FIG. 35b, in a possible implementation, the flat cable circuit board 13 may extend out of a wide edge of the packaging part 113, and an extended length forms an extension area 1303. A ground point 191 may be disposed in the extension area 1303. That is, a length L2 of the flat cable circuit board 13 may be set to be greater than a length of the packaging part 113, and the length L2 of the flat cable circuit board 13 is less than a length L3 of the display part 111 (the flexible cabling circuit board 15 is not considered). In this case, the ground point 191 may be disposed on a side that is of the flat cable circuit board 13 and that faces the light-emitting surface of the display part, and is located in an area that is of the flat cable circuit board 13 and that extends out of the packaging part 113. The ground point 191 may be formed after a copper leakage design is performed on a surface of the flat cable circuit board 13. After the display panel 11 is bent, the ground point 191 may be in contact with the metal plate 16 for conduction, thereby implementing grounding.

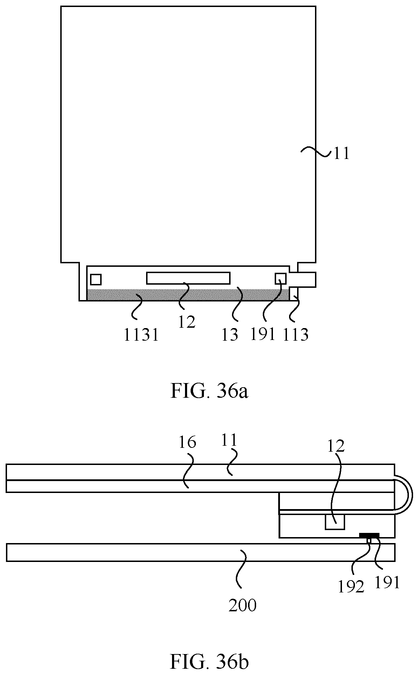

FIG. 36a is a top view of a display module in which a display panel is in an unfolded state according to an embodiment of this application. FIG. 36b is a side sectional view of a display module in which a display panel is in a bent state according to an embodiment of this application. As shown in FIG. 36a and FIG. 36b, in another possible implementation, a ground point 191 may be disposed on a side that is of the flat cable circuit board 13 and that faces away from the display part 11. In this case, a conductive connector 192 may be further disposed, and the conductive connector 192 may be connected between the ground point 191 and the middle frame 200, thereby implementing grounding.

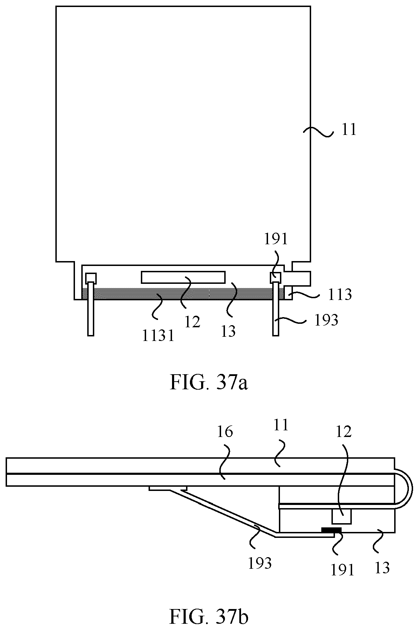

FIG. 37a is a top view of a display module in which a display panel is in an unfolded state according to an embodiment of this application. FIG. 37b is a side sectional view of a display module in which a display panel is in a bent state according to an embodiment of this application. As shown in FIG. 37a and FIG. 37b, in another possible implementation, a ground point 191 may be disposed on a side that is of the flat cable circuit board 13 and that faces away from the display part 11. In this case, a conductive wire 193 may be further disposed, and the conductive wire 193 may be, for example, copper foil, a cable, or a flexible printed circuit. The conductive wire 193 may be connected between the ground point 191 and the metal plate 16, thereby implementing grounding.

It should be understood that the flat cable circuit board 13 may be connected to the middle frame 200 or the metal plate 16 to implement grounding. In addition to the foregoing three grounding structures, there may be a plurality of other implementations. This is not specifically limited in embodiments of this application.

In conclusion, embodiments of this application provide a display module and an electronic device. Both a flat cable circuit board and a driver chip are bonded to a packaging part that is of a display panel and that is bent to a back side of a light-emitting surface, so that a length size and a width size that are occupied by the flat cable circuit board may be reduced, thereby providing more space for a battery and increasing a battery capacity of the electronic device.

With reference to FIG. 5, in the related technology, an extreme of an X-direction size D1 occupied by the flat cable circuit board 13 is designed to be 6 mm. With reference to FIG. 6, FIG. 23, and FIG. 30, D1 may be reduced to 0 in the three embodiments provided in this application. Therefore, a length or width size of 6 mm may be added to the battery 400. In a specific implementation, when a thickness and a length of the battery remain unchanged, a width is increased by 6 mm, and a battery capacity may be increased by 311.92 mAh, compared with the related technology. For specific data, refer to Table 1 below.

**Table 1**

| | Battery thickness mm | Battery width mm | Battery length mm | Rated battery capacity mAh |
|---|---|---|---|---|
| Related technology | 2.48 | 39.20 | 122.95 | 2012.69 |
| Embodiment of this application | 2.48 | 45.20 | 122.95 | 2324.61 |

According to the display module and the electronic device that are provided in embodiments of this application, the battery capacity may be effectively increased, a plurality of arrangement manners and bonding structures of the flat cable circuit board 13 and the driver chip 12 are further provided, and a waterproofing solution and a grounding solution are adaptively provided, so that the display module is more flexible in an overall space design.

Finally, it should be noted that: The foregoing embodiments are merely used to describe the technical solutions of embodiments of this application, but not to limit the technical solutions. Although embodiments of this application are described in detail with reference to the foregoing embodiments, a person of ordinary skill in the art should understand that: The technical solution described in the foregoing embodiments may still be modified, or some or all of the technical features thereof may be equivalently replaced. However, these modifications or replacements do not cause the essence of the corresponding technical solutions to depart from the scope of the technical solutions in the embodiments of this application.

## Claims

1. A display module, comprising a display panel (11) and a flat cable circuit board (13);
the display panel (11) comprises a display part (111), a bending part (112), and a packaging part (113); and the packaging part (113) is bent to a back side of a light-emitting surface of the display part (111) by using the bending part (112), the packaging part (113) comprises a first end and a second end, the first end is an end that is of the packaging part (113) and that is away from the bending part (112), and the second end is an end that is of the packaging part (113) and that is connected to the bending part (112);
the flat cable circuit board (13) is a multilayer printed circuit board or a multilayer flexible printed circuit, a quantity of wiring layers (1301) of the flat cable circuit board (13) is greater than or equal to 2, the flat cable circuit board (13) is disposed on a surface that is of the packaging part (113) and that faces away from the display part (111), and the flat cable circuit board (13) is located between the first end and the second end; and
a first bonding area (1131) is disposed on the packaging part (113), the first bonding area (1131) is located at the first end, and a partial area of the flat cable circuit board (13) is bonded to the first bonding area (1131).

2. The display module according to claim 1, wherein the flat cable circuit board (13) comprises a first zone (13a) and a second zone (13b), a bonding pin (140) is disposed in the first zone (13a), the bonding pin (140) is bonded to the first bonding area (1131), and an adhesive is disposed between the second zone (13b) and the packaging part (113).

3. The display module according to claim 2, wherein the display module further comprises a driver chip (12), the driver chip (12) is disposed on the surface that is of the packaging part (113) and that faces away from the display part (111), a second bonding area (1132) is disposed on the packaging part (113), the second bonding area (1132) is located between the bending part (112) and the first bonding area (1131), and the driver chip (12) is bonded to the second bonding area (1132).

4. The display module according to claim 3, wherein a through hole (1321) is disposed on the flat cable circuit board (13), the driver chip (12) is disposed in the through hole (1321), and there is a spacing between the driver chip (12) and a side wall of the through hole (1321).

5. The display module according to claim 3, wherein a blind hole (1322) is disposed on the flat cable circuit board (13), the driver chip (12) is disposed in the blind hole (1322), and a sum of a depth of the blind hole (1322) and a thickness of the adhesive is greater than or equal to a height that is of the driver chip (12) and that is relative to the packaging part (113).

6. The display module according to any one of claims 1 to 5, wherein the display module further comprises a flexible cabling circuit board (15), the flexible cabling circuit board (15) is connected to a wide edge of the flat cable circuit board (13), and the flexible cabling circuit board (15) is configured to connect to a main board (500); and
an extension direction of the wide edge of the flat cable circuit board (13) is the same as a direction from the first end to the second end.

7. The display module according to any one of claims 3 to 6, wherein the display module further comprises a waterproof dispensed glue (181), and the waterproof dispensed glue (181) extends along an edge of the flat cable circuit board (13) to fill a gap between the flat cable circuit board (13) and the packaging part (113); and
three sides of the flat cable circuit board (13) other than a side facing the bending part (112) are all covered with the waterproof dispensed glue (181).

8. The display module according to claim 7, wherein the display module (100) further comprises a waterproof back adhesive (182), the waterproof back adhesive (182) is attached to a surface that is of the flat cable circuit board (13) and that faces away from the packaging part (113), and the waterproof back adhesive (182) is located at an end that is of the flat cable circuit board (13) and that is close to the bending part (112), and extends along a length direction of the flat cable circuit board (13); and the waterproof back adhesive (182) covers a full length of the flat cable circuit board (13); and
projections that are of the waterproof back adhesive (182) and the waterproof dispensed glue (181) and that are on the packaging part (113) form a closed pattern.

9. The display module according to any one of claims 3 to 5, wherein the bonding pin (140) is disposed on a bottom wiring layer in the first zone (13a), and the bottom wiring layer is a layer that is in the plurality of wiring layers (1301) and that is closest to the packaging part (113); and
the bonding pin (140) is connected to wiring on a bottom wiring layer (1301) in the second zone (13b), or the bonding pin (140) is connected to wiring on a non-bottom wiring layer in the first zone (13a).

10. The display module according to any one of claims 1 to 9, wherein the display module further comprises a metal plate (16), and the metal plate (16) is attached to the back side of the light-emitting surface of the display part (111).

11. The display module according to claim 10, wherein the flat cable circuit board (13) comprises an extension area (1303) extending out of a wide edge of the packaging part (113), a ground point (191) is disposed in the extension area (1303), the ground point (191) is disposed on a surface that is of the flat cable circuit board (13) and that faces the packaging part (113), and the ground point (191) is in contact with the metal plate (16) for conduction; and
an extension direction of the wide edge of the packaging part (113) is the direction from the first end to the second end.

12. The display module according to claim 10, wherein the display module further comprises a conductive wire (193), a ground point (191) is disposed on the surface that is of the flat cable circuit board (13) and that faces away from the packaging part (113), one end of the conductive wire (193) is connected to the ground point (191), the other end of the conductive wire (193) is connected to the metal plate (16), and an extension direction of the conductive wire (193) is the same as a width direction of the packaging part (113).

13. The display module according to claim 10, wherein the display module further comprises a conductive connector (192), a ground point (191) is disposed on the surface that is of the flat cable circuit board (13) and that faces away from the packaging part (113), the conductive connector (192) is connected to the ground point (191), and the conductive connector (192) is configured to connect to a middle frame (200).

14. An electronic device, comprising a middle frame (200), a rear cover (300), and the display module according to any one of claims 1 to 13, wherein the display module and the rear cover (300) are respectively connected to two sides of the middle frame (200), accommodating space is enclosed by the display module, the rear cover (300), and the middle frame (200), a main board (500) and a battery (400) are disposed in the accommodating space, and the flat cable circuit board (13) is connected to the main board (500) by using the flexible cabling circuit board (15).
